# EUROPÄISCHE PATENTSCHRIFT

(11) **EP 2 758 812 B1**
(45) Veröffentlichungstag und Bekanntmachung des Hinweises auf die Patenterteilung: **25.04.2018**
(21) Anmeldenummer: 12756090.2
(22) Anmeldetag: 16.08.2012
(51) Int. Cl.: G02B 21/06, G02B 21/08, G02B 5/04

(54) **VORRICHTUNG UND VERFAHREN ZUR DURCHLICHTBELEUCHTUNG FÜR LICHTMIKROSKOPE UND MIKROSKOPSYSTEM**
TRANSILLUMINATION DEVICE AND METHOD FOR LIGHT MICROSCOPES, AND A MICROSCOPE SYSTEM
DISPOSITIF ET PROCÉDÉ D'ÉCLAIRAGE PAR TRANSMISSION POUR DES MICROSCOPES OPTIQUES ET SYSTÈME DE MICROSCOPE

(30) Priorität: 23.09.2011 DE 102011114377
(43) Veröffentlichungstag der Anmeldung: 30.07.2014
(73) Patentinhaber: Carl Zeiss Microscopy GmbH, 07745 Jena (DE)
(72) Erfinder: HEIN, Detlef, 37085 Göttingen (DE)
(74) Vertreter: Schiffer, Axel Martin
(86) Internationale Anmeldenummer: PCT/EP2012/003497
(87) Internationale Veröffentlichungsnummer: WO 2013/041172

(56) Entgegenhaltungen:
- WO-A1-2010/024235
- JP-A- 2002 189 174
- US-A1- 2001 005 280
- US-A1- 2005 259 320
- US-A1- 2008 088 919
- US-A1- 2011 042 555

## Beschreibung

Die vorliegende Erfindung bezieht sich in einem ersten Gesichtspunkt auf eine Vorrichtung zur Durchlichtbeleuchtung für Lichtmikroskope, insbesondere Stereomikroskope oder Makroskope, nach dem Oberbegriff des Anspruchs 1.

In einem weiteren Aspekt betrifft die Erfindung ein Verfahren zur Durchlichtbeleuchtung für Lichtmikroskope, insbesondere Stereomikroskope oder Makroskope, nach dem Oberbegriff des Anspruchs 13. Außerdem bezieht sich die Erfindung auf ein Mikroskopsystem.

Eine gattungsgemäße Vorrichtung zur Durchlichtbeleuchtung für Lichtmikroskope ist beispielsweise in EP 1 591 821 A1 beschrieben und weist eine Lichtquelle zum Aussenden eines Beleuchtungslichtbündels und eine Halteeinrichtung zum Halten einer zu untersuchenden Probe auf. Außerdem ist zum Einstellen des Kontrasts zwischen der Lichtquelle und der Halteeinrichtung eine Ablenkeinrichtung vorhanden, mit welcher eine Winkelverteilung des Beleuchtungslichtbündels relativ zu einer optischen Achse variierbar ist.

Bei einem gattungsgemäßen Verfahren wird eine von einer Halteeinrichtung gehaltene Probe mit Beleuchtungslicht von einer Lichtquelle beaufschlagt und eine Winkelverteilung eines Beleuchtungslichtbündels wird zum Einstellen des Kontrasts mit einer Ablenkeinrichtung variiert.

In EP 1 591 821 A1 wird eine Durchlichteinrichtung mit transparenter Objektauflage beschrieben, die über eine als Lichtquelle fungierende Leuchtfläche beleuchtet wird. Zwischen der Lichtquelle und der Objektauflage ist dabei eine Ablenkeinrichtung vorhanden, mit welcher die Lichtausbreitung in mindestens einer Richtung begrenzt wird. Durch eine geeignete Dimensionierung der in EP 1 591 821 A1 beschriebenen Anordnung soll eine Kontrastverbesserung erzielt werden.

In DE 10 2004 056 685 A1 ist eine Beleuchtungseinrichtung mit zwei schwenkbaren Blenden beschrieben. Der Drehpunkt der Blenden ist dabei fixiert und lässt sich nicht verschieben. Außerdem gibt es keine Mittel zur Erfassung, Speicherung und/oder Reproduzierung von den Beleuchtungseinstellungen der schwenkbaren Blenden oder automatisch an das Objekt angepasste Voreinstellungen. Die in DE 10 2004 056 685 A1 beschriebene Beleuchtungseinrichtung ist deshalb wenig komfortabel in der Bedienung.

US-7,133,199 B2 beschreibt ein strukturiertes Beleuchtungselement zur Anpassung der Beleuchtung an zwei Kanäle. Die Hauptausbreitungsrichtungen des umgelenkten Beleuchtungslichts stimmen dabei jeweils mit den Achsen der beiden Kanäle überein.

In JP 2007017901 A2 ist eine Durchlichtbasis für Stereo- und Monobeobachtung mit Umschaltung durch eine Strahlteilerfolie offenbart.

US 2008/0088919 A1 bezieht sich auf eine Durchlichtquelle, bei der zwischen einer flächigen Lichtquelle und einem mikroskopischen Strahlengang eine Prismenschicht vorhanden ist.

In US 2001/005280 A1 ist eine Lichtquelle für ein Stereomikroskop beschrieben, bei der in einen weitgehend kollimierten Strahlengang eine Blendenkante eingeschoben wird.

JP 2002189174 betrifft ein Lichtmikroskop mit einer aus einer Vielzahl von lichtemittierenden Elementen aufgebauten flächigen Lichtquelle- Zwischen der flächigen Lichtquelle und dem mikroskopischen Strahlengang ist eine Beugungsoptik vorhanden.

Gegenstand von US 2005/0259320 A1 ist ein Mikroskop, bei dem im Mikroskopkörper eine Durchlichtquelle vorhanden ist.

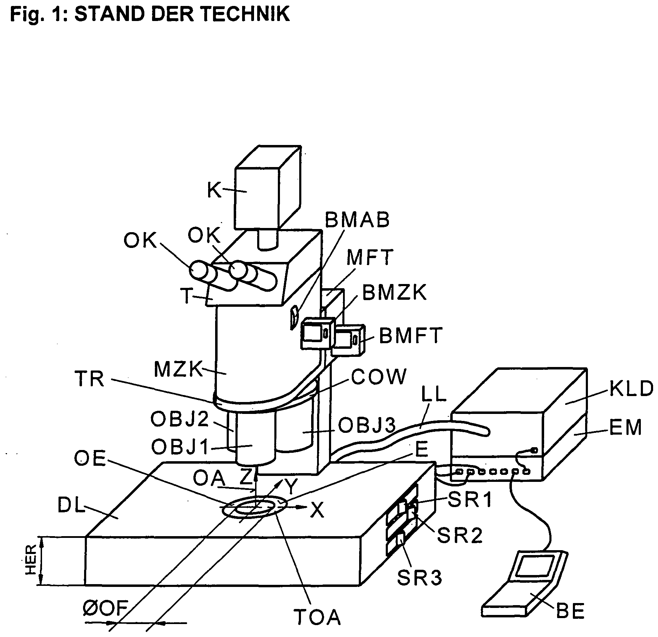

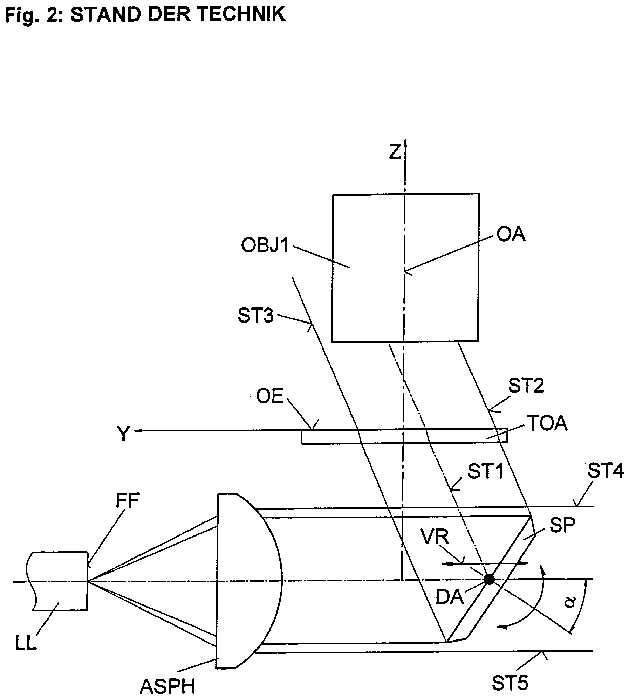

Der Stand der Technik wird anhand der Figuren 1 und 2 näher erläutert.

Figur 1 zeigt eine typische Stereomikroskop-Anordnung nach dem Stand der Technik. Eine Durchlichteinrichtung DL leuchtet das Objektfeld mit einem Durchmesser OF aus, das sich in der Ebene OE befindet, die durch die am höchsten liegende Fläche der Durchlichteinrichtung DL gekennzeichnet ist. Auf der Durchlichteinrichtung DL befindet sich eine motorisierte Fokussiereinrichtung MFT, die sich über eine Bedieneinheit BMFT bedienen lässt und an der ein Träger TR mit einem codierten Objektivwechsler COW angebracht ist. Über den Objektivwechsler COW lassen sich drei Objektive OBJ1, OBJ2, OBJ3 mit unterschiedlichen Eigenschaften benutzen. Beispielsweise hat das Objektiv OBJ2 neben einer anderen Objektivvergrößerung bei dem kleinsten Zoomfaktor β auch eine deutlich weiter von der Objektebene OE entfernt liegende Eintrittspupille, als die beiden anderen Objektive.

Mit dem Bezugszeichen BMAB ist in Figur 1 ein Bedienelement für eine motorisierte Aperturblende MAP gekennzeichnet. Eine Ebene in Höhe der Objektauflage auf der Durchlichteinrichtung ist mit E bezeichnet. MFT kennzeichnet eine motorisierte Fokussiereinrichtung.

Auf dem Träger TR ist ein motorisierter Zoomkörper MZK angeordnet, der sich über eine Bedieneinheit BMZK bedienen lässt. Auf dem motorisierten Zoomkörper MZK befindet sich ein Tubus T, mit dem sich das Stereomikroskopbild direkt über die beiden Okulare OK beobachten lässt. Außerdem ermöglicht der Tubus T über eine angeschlossene Kamera K auch die Dokumentation der betrachteten Bilder.

Die im Stand der Technik nicht motorisierte Durchlichteinrichtung DL wird durch eine Kaltlichtquelle KLD über einen faseroptischen Lichtleiter LL mit Licht versorgt; sie hat drei manuell einstellbare Bedienelemente SR1, SR2, SR3 zur Variation der Beleuchtungseinstellungen.

Die Steuerung des Gesamtsystems erfolgt durch das Elektronikmodul EM und die daran angeschlossene Bedieneinheit BE. Die Kommunikation innerhalb des Gesamtsystems wird beispielsweise über einen CAN-Bus realisiert.

Zur weiteren Betrachtung wird ein Koordinatensystem mit den Koordinatenachsen X, Y und Z eingeführt. Der Koordinatenursprung liegt im Zentrum der Objektebene OE. Aus Vereinfachungsgründen wird in dieser Darstellung die Oberseite der transparenten Objektauflage TOA anfokussiert, das heißt OE ist identisch mit der Oberseite der transparenten Objektauflage TOA und liegt in der Ebene, die aus den Koordinatenachsen X und Y aufgespannt wird. Die positiven Halbachsen zeigen vom Benutzer aus gesehen in folgende Richtungen: X nach rechts, Y nach hinten, Z nach oben. Die Z-Achse ist identisch mit der optischen Achse OA des gerade eingeschalteten Objektivs.

Für Stereomikroskope und Makroskope gibt es zahlreiche Durchlicht-Beleuchtungsverfahren, die hauptsächlich aufgrund der Zoomfunktion des Zoomkörpers MZK nicht für alle möglichen Abbildungsbedingungen eine geeignete Ausleuchtung liefern können. Dies gilt besonders für den Übersichtsbereich, das heißt für die kleineren Zoomfaktoren des Zoomkörpers. Häufig wird die Beleuchtung von Stereomikroskopen und Makroskopen mit geeigneten Mitteln, zum Beispiel mit Milchüberfanggläsern, homogenisiert. Dadurch verbessert sich zwar die Homogenität der Ausleuchtung, allerdings nimmt der Kontrast aufgrund der Lichtverteilung in größere Raumwinkelbereiche entsprechend ab, das störende Streulicht nimmt zu. Somit liefern die entsprechend ausgeleuchteten Übersichtsabbildungen nur sehr schlechte Kontraste, viele Details lassen sich erst mit größeren Zoomfaktoren β erkennen. Das hierdurch erforderliche Hoch- und Herunterzoomen erfordert viel Zeit und die Übersicht geht während des Zoomvorgangs bei größeren Zoomfaktoren β verloren.

Figur 2 zeigt das Funktionsprinzip einer bekannten Durchlichteinrichtung DL aus Figur 1. Die Frontfläche FF des Lichtleiters LL wird über eine Asphäre ASPH näherungsweise nach Unendlich abgebildet, das heißt die von einem gemeinsamen Punkt der Frontfläche FF des Lichtleiters LL ausgehenden Lichtstrahlen verlaufen nach der Asphäre ASPH parallel. Als Beispiel sind in Figur 2 die Lichtstrahlen ST1, ST2, ST3, ST4 und ST5 ausgehend von einem gemeinsamen Punkt auf dem Lichtleiter LL dargestellt. Hinter der Asphäre ASPH befindet sich ein Umlenkspiegel SP, der sich über die drei in Figur 1 dargestellten Bedienelemente SR1, SR2, SR3 in verschiedene Richtungen bewegen oder drehen lässt.

Über das Bedienelement SR1 wird der Spiegel SP um die Drehachse DA bis zum gewünschten Einstellwinkel α gedreht, wodurch die auf den Umlenkspiegel SP treffenden Lichtstrahlen in die entsprechenden Richtungen umgelenkt werden können. Mit dem Bedienelement SR2 lässt sich der Umlenkspiegel SP zusammen mit der Drehachse DA in der Verschieberichtung VR bewegen. Dadurch treten die vom Umlenkspiegel SP reflektierten Lichtstrahlen abhängig von der Spiegelposition an verschiedenen Punkten durch die transparente Objektauflage TOA und die Objektebene OE hindurch.

Über das Bedienelement SR3 wird der Umlenkspiegel SP in der X-Richtung, also senkrecht zur Darstellungsebene, bewegt. Dadurch wird ohne Änderung der Spiegelgeometrie eine andere Spiegeloberfläche mit abweichenden Reflexionseigenschaften wirksam. Beide benutzbaren Spiegeloberflächen reflektieren nicht zu 100% gerichtet, das heißt sie reflektieren diffus streuend, wobei der Streuanteil beider Spiegeloberflächen unterschiedlich groß ist. Um eine möglichst homogene Beleuchtung zu erzielen, ist die stärker streuende Spiegeloberfläche zu benutzen, wodurch sich der Kontrast verschlechtert und die Bildhelligkeit abnimmt. Eine rotationssymmetrische Durchlicht-Hellfeld-Beleuchtung lässt sich realisieren, wenn der Umlenkspiegel SP so eingestellt wird, dass der Hauptstrahl, also der Lichtstrahl ST1 deckungsgleich mit der optischen Achse OA des Objektivs in das Objektiv OBJ1 eintritt. Dies ist dann der Fall, wenn der Einstellwinkel α = 45° beträgt und der Auftreffpunkt des Lichtstrahls ST1 auf dem Umlenkspiegel SP auf der optischen Achse OA des Objektivs OBJ1 liegt. Der Umlenkspiegel SP lenkt dann das von hinten aus der positiven Y-Richtung kommende Licht nach oben in Richtung der positiven Z-Achse um.

Auf Kosten der Homogenität lässt sich der Kontrast steigern, wenn die schwächer streuende Spiegeloberfläche benutzt wird, was einer eher gerichteten Beleuchtung entspricht. Bei höheren Vergrößerungen lässt sich eine deutliche Kontrastverstärkung bei noch brauchbarer Homogenität erzielen, wenn eine Schräglichtbeleuchtung eingesetzt wird. Hierzu wird der Umlenkspiegel SP gedreht und in der Verschieberichtung VR so weit verschoben, bis das Objektiv OBJ1 in der gewünschten Weise ausgeleuchtet wird. Hierbei kann eine weitere Kontraststeigerung beobachtet werden, wenn die Spiegelkanten wirksam werden, das heißt wenn sprunghafte Helligkeitsunterschiede in der Beleuchtung für eine Kontraststeigerung genutzt werden können. Dieser Effekt wirkt aber nur in relativ kleinen Bereichen des Objektfelds, das heißt homogene Beleuchtungen für größere Übersichts-Objektfelder lassen sich damit nicht realisieren.

Das Einstellen der beschriebenen Beleuchtungsparameter erfordert vom Benutzer eine gewisse Erfahrung, das heißt ungeübte Benutzer sind mit der Beleuchtungseinstellung über die drei Bedienelemente SR1, SR2, SR3 ohne weitere Hilfestellung gegebenenfalls überfordert.

Durchlichteinrichteinrichtungen DL, die einen neigbaren Umlenkspiegel SP gemäß Fig. 2 enthalten, erfordern zur Ausleuchtung von größeren Objektfeldern aus konstruktiven Gründen außerdem eine relativ große Bauhöhe. Trotzdem ist die erreichbare Homogenität und Kontrastierung auch bei einer großen Bauhöhe mit dieser Anordnung noch nicht optimal.

Bei normalen Lichtmikroskopen und einigen Makroskopen sind Durchlicht-Beleuchtungsverfahren bekannt, die eine feste Pupillenebene voraussetzen. Dann werden meistens kontraststeigernde Elemente in den Beleuchtungsstrahlengang und/oder den Abbildungsstrahlengang gebracht, insbesondere in die Objektivpupille oder eine hierzu konjugierte Ebene. Dies ist extrem aufwändig und lässt sich an Zoomsystemen, also auch an Stereomikroskopen und Makroskopen, wenn überhaupt, nur mit starken Einschränkungen realisieren. Diese klassischen Verfahren funktionieren nur mit speziellen Objektiven mit teurem Zubehör, zum Beispiel DIC-Schieber, und nur in bestimmten Zoombereichen. Das Optik-Design erfordert ungünstig große Bauräume sowie gegebenenfalls spannungsfreie Optiken für Polarisationsverfahren. Außerdem muss in der Beleuchtungseinrichtung eine Möglichkeit zur Manipulation der kontraststeigernden Elemente sowie in der Regel auch eine Möglichkeit zur Anpassung an verschieden große Objektfelder durch wechselbare Kondensorlinsen vorhanden sein. Diese Lösungen sind somit nur für spezielle Anwendungen geeignet und zudem teuer.

Sämtliche Lösungen im Stand der Technik sind aufwändig in der Realisierung und/oder lassen im Hinblick auf die Bedienbarkeit und Benutzerfreundlichkeit zu wünschen übrig.

Als eine Aufgabe der Erfindung kann erachtet werden, eine Vorrichtung und ein Verfahren zur Durchlichtbeleuchtung für Lichtmikroskope anzugeben, mit welchen auch für sehr unterschiedliche optische Konstellationen kontrastreiche Abbildungen bei Durchlichtbeleuchtung erzielt werden können. Außerdem soll im Vergleich zum Stand der Technik die Bedienbarkeit verbessert werden.

Diese Aufgabe wird in einem ersten Gesichtspunkt durch die Vorrichtung mit den Merkmalen des Anspruchs 1 gelöst.

In verfahrensmäßiger Hinsicht wird die Aufgabe durch das Verfahren mit den Merkmalen des Anspruchs 13 gelöst. Außerdem wird durch die Erfindung ein Mikroskopsystem mit den Merkmalen des Anspruchs 22 bereitgestellt.

Vorteilhafte Ausführungsbeispiele der erfindungsgemäßen Vorrichtung und bevorzugte Varianten des erfindungsgemäßen Verfahrens werden im Folgenden mit Bezug auf die abhängigen Ansprüche und insbesondere im Zusammenhang mit den beigefügten Figuren erläutert.

Die Vorrichtung und das Verfahren der oben genannten Art sind erfindungsgemäß dadurch weitergebildet, dass die Ablenkeinrichtung eine Prismenfolie aufweist.

Schutz wird außerdem beansprucht für ein Mikroskopsystem, welches ein Lichtmikroskop und eine erfindungsgemäße Vorrichtung zur Durchlichtbeleuchtung aufweist.

Als ein erster Kerngedanke der Erfindung kann erachtet werden, das von der Lichtquelle ausgesandte Beleuchtungslicht mit einer Ablenkeinrichtung, welche eine Mikroprismenstruktur mit einer Vielzahl von gleich wirkenden Elementen aufweist, umzulenken. Dadurch kann die Winkelverteilung des Beleuchtungslichts gezielt beeinflusst werden.

Dadurch können die Einsatzmöglichkeiten einer Vorrichtung zur Durchlichtbeleuchtung mit einer flächigen Lichtquelle erheblich gesteigert werden. Insbesondere kann der Kontrast variabel eingestellt werden. Insbesondere für kontrastarme Proben sind dabei deutliche Verbesserungen der Darstellungsqualität möglich.

Das erfindungsgemäße Verfahren kann insbesondere mit der erfindungsgemäßen Vorrichtung zur Durchlichtbelauchtung verwirklicht werden. Hierzu ist bei dem erfindungsgemäßen Mikroskopsystem in einer vorteilhaften Variante eine Steuereinrichtung vorhanden, die mit Bestandteilen des Lichtmikroskops und der Vorrichtung zur Durchlichtbeleuchtung verbunden ist und zum Ansteuern des Mikroskops und der Vorrichtung zur Durchlichtbeleuchtung zur Durchführung eines erfindungsgemäßen Verfahrens eingerichtet ist.

Erfindungsgemäß weisen die Prismen der Prismenfolie in Richtung der Lichtquelle. Die Vorteile, also insbesondere deutliche Verbesserungen des Kontrasts, werden dabei in besonderer Weise erreicht.

Bei einer besonders bevorzugten Ausgestaltung der erfindungsgemäßen Vorrichtung ist eine Hauptablenkrichtung der Ablenkeinrichtung, also im Wesentlichen der Prismenfolie, von der optischen Achse verschieden. So wird eine Schräglichtbeleuchtung bewerkstelligt, mit der gute Kontraststeigerungen möglich sind.

Im Detail hängen die erzielbaren Kontrastsverbesserungen von den optischen Parametern des Prismenfilms, also der einzelnen Prismen, ab. Eingehende Versuche haben hier gezeigt, dass besonders gute Ergebnisse möglich sind, wenn die Prismen des Prismenfilms einen Prismenwinkel von 20° bis 30°, bevorzugt von 24° bis 28° und besonders bevorzugt von 26°, aufweisen.

Die erzielbaren Kontraststeigerungen hängen im Einzelnen stark von der jeweiligen Probe ab. Bei weiteren vorteilhaften Varianten der erfindungsgemäßen Vorrichtung ist deshalb die Ablenkeinrichtung um eine quer zur optischen Achse orientierte Drehachse drehbar. Das bedeutet, dass die Schräglichtbeleuchtung aus unterschiedlichen Winkeln relativ zu der zu untersuchenden Probe erfolgen kann. Zweckmäßig wird die Drehachse dabei so gewählt, dass sie parallel zur Richtung der Prismenkanten orientiert ist.

Die Variabilität der Durchlichtbeleuchtung kann weiter gesteigert werden, wenn Mittel zum variablen Positionieren der Ablenkeinrichtung in einer Richtung quer zur optischen Achse und/oder in Richtung der optischen Achse vorhanden sind. Insbesondere kann mit solchen Mitteln der Winkel einer Schräglichtbeleuchtung variiert werden.

Sodann können für Fälle, in welchen eine Beleuchtung der zu untersuchenden Probe über den Prismenfilm nicht zweckmäßig und/oder nicht gewünscht ist, Mittel vorhanden sein zum Herausbewegen der Ablenkeinrichtung aus einem Strahlengang des Beleuchtungslichts und Hereinbewegen der Ablenkeinrichtung in den Strahlengang des Beleuchtungslichts.

In diesem Zusammenhang kann die Funktionalität der erfindungsgemäßen Vorrichtung weiter gesteigert werden, wenn mindestens eine Blendenkante zum Beschneiden des Beleuchtungslichtbündels vorhanden ist, wobei die Blendenkante zwischen der Halteeinrichtung und der Lichtquelle angeordnet ist und sich quer zu einer optischen Achse, insbesondere eines Objektivs, eines Lichtmikroskops erstreckt, welches in einem Betriebszustand an der Vorrichtung zur Durchlichtbeleuchtung positioniert werden kann. Der Strahlengang des Beleuchtungslichts zwischen der Blendenkante und einer von der Halteeinrichtung gehaltenen Probe kann dabei insbesondere frei von verstellbaren strahlfokussierenden Komponenten sein. Außerdem sind zum Anpassen des Strahlengangs des Beleuchtungslichts an eine wirksame Eintrittspupille des Objektivs Mittel zum variablen Positionieren der Blendenkante in Richtung der optischen Achse vorhanden und eine Position der Blendenkante ist in Richtung der optischen Achse, insbesondere unabhängig von einer Position der Blendenkante quer zur optischen Achse, variierbar.

Dieser Weiterbildung liegt als Kerngedanke zugrunde, das von der Lichtquelle ausgesandte Beleuchtungslicht mit einer Blendenkante zu beschneiden, wobei die Blendenkante in Richtung der optischen Achse je nach Lage der wirksamen Eintrittspupille des optischen Systems einstellbar ist.

Beleuchtungslicht, das von Orten außerhalb der Eintrittspupillen in das optische System, also das Mikroskopobjektiv, eintritt, kann dort in der Durchlichthellfeldabbildung nicht zur Abbildung selbst, sondern nur zum Streuuntergrund beitragen. Das ist nicht erwünscht und hieraus ergibt sich eine weitere vorteilhafte Verfahrensvariante, bei der eine Leuchtfläche der Lichtquelle einer tatsächlich wirksamen Rückprojektion des Beleuchtungslichts angepasst wird. Das bedeutet, dass Teile der Leuchtfläche, die kein zur Abbildung beitragendes Beleuchtungslicht liefern können, von vornherein ausgeblendet werden. Hierzu ist bei der erfindungsgemäßen Vorrichtung vorteilhafterweise zum Variieren einer wirksamen Leuchtfläche der Lichtquelle mindestens eine weitere Blende vorhanden. Diese kann zweckmäßig unmittelbar vor der Lichtquelle positioniert werden.

Bei einer besonders vorteilhaften Ausführungsvariante der erfindungsgemäßen Vorrichtung ist die Blendenkante eine Kante einer mechanischen Blende und die Ablenkeinrichtung mit der Prismenfolie ist an der mechanischen Blende gebildet. Zum Bereitstellen der Blendenfunktionalität weist die mechanische Blende mindestens einen lichtundurchlässigen Teilbereich auf. So kann ein hochfunktionales System bereitgestellt werden, bei welchem für verschiedene optische Situationen entweder die Blendenkante und/oder die Prismenfolie zum Einsatz kommen kann.

Hieraus ergeben sich weitere vorteilhafte Varianten des erfindungsgemäßen Verfahrens, bei denen die Blendenkante aus dem Strahlengang des Beleuchtungslichts herausbewegt und die Ablenkeinrichtung in den Strahlengang des Beleuchtungslichts hineinbewegt wird, wenn eine wirksame Eintrittspupille des Objektivs außerhalb eines für die Blendenkante zugänglichen Bereichs liegt. Der Bedienkomfort für einen Benutzer kann hierbei gesteigert werden, wenn die Einstellungen der Ablenkeinrichtung, der mindestens eine Blendenkante und/oder weiterer Blenden, insbesondere nach Benutzereingabe, automatisiert vorgenommen werden.

Die erzielten Resultate hängen im Hinblick auf Darstellungsqualität und Kontrastierung der Probe stark insbesondere von der Ortsposition der Blendenkante ab, da durch die Blendenkante die Beleuchtung empfindlich variiert und eingestellt werden kann.

Beispielsweise kann bei einer besonders bevorzugten Ausführungsform der erfindungsgemäßen Vorrichtung zum Verschieben der Blendenkante in Richtung der optischen Achse und in Richtung quer zur optischen Achse eine Schlittenmechanik mit einem ersten Schlitten und einem zweiten Schlitten vorhanden sein. Zum Antrieb dieser Schlitten können Schrittmotoren verwendet werden, mit welchen eine präzise Positionierung möglich ist.

Bei einer weiteren vorteilhaften Ausführungsvariante der erfindungsgemäßen Vorrichtung ist zum Beschneiden des Beleuchtungslichtbündels zwischen der Halteeinrichtung und der Lichtquelle mindestens eine weitere variabel positionierbare Blende vorhanden. Mit einer solchen weiteren Blende, welche insbesondere eine lineare Blendenkante aufweisen kann, können im Hinblick auf das Reduzieren von Streulicht weitere Verbesserungen erzielt werden. Außerdem kann es zweckmäßig sein, für bestimmte Lagen der Eintrittspupille eine weitere variabel positionierbare Blende zur Verfügung zu haben.

Eine weitere vorteilhafte Ausgestaltung der erfindungsgemäßen Vorrichtung besteht in diesem Zusammenhang darin, dass eine erste mechanische Blende und eine zweite mechanische Blende vorhanden ist, dass die Blendenkante durch eine Kante der ersten mechanischen Blende oder durch eine Kante der zweiten mechanischen Blende gebildet ist und dass zum Verschieben der Blendenkante in Richtung der optischen Achse und in Richtung quer zur optischen Achse eine erste Schlittenmechanik mit einem ersten Schlitten und einem zweiten Schlitten für die erste mechanische Blende und eine zweite Schlittenmechanik mit einem dritten Schlitten und einem vierten Schlitten für die zweite mechanische Blende vorhanden ist. Mit dieser Anordnung kann die effektiv wirksame Blendenkante variabel an unterschiedlichste Lagen der Eintrittspupille angepasst werden.

Im Hinblick auf die einzusetzende Lichtquelle kommt es von der grundsätzlichen Funktion zwar nur darauf an, dass Licht mit einer gewünschten spektralen Zusammensetzung in einer gewünschten Intensität bereitgestellt wird. Im Hinblick auf eine möglichst kompakte Anordnung in baulicher Hinsicht werden bei besonders bevorzugten Varianten der erfindungsgemäßen Vorrichtungen flächige Lichtquellen, insbesondere eine Mehrzahl von Leuchtdioden eingesetzt. Besonders vorteilhaft im Hinblick auf Baugröße und Lichtleistung sind Weißlicht-LEDs. Besonders bevorzugt können sogenannte PHLOX-Lichtquellen eingesetzt werden.

In verfahrensmäßiger Hinsicht ist hierzu bevorzugt, dass ein von der Lichtquelle ausgehendes Beleuchtungslichtbündel von einer zwischen der Halteeinrichtung und der Lichtquelle angeordneten Blendenkante beschnitten wird, wobei insbesondere ein Strahlengang des Beleuchtungslichts zwischen der Blendenkante und der von der Halteeinrichtung gehaltenen Probe frei ist von verstellbaren strahlfokussierenden Komponenten und wobei die Blendenkante sich quer zu einer optischen Achse des Objektivs erstreckt und abhängig von der Lage der wirksamen Eintrittspupille des Objektivs in Richtung der optischen Achse des Objektivs positioniert wird.

Gemäß einer weiteren vorteilhaften Variante des erfindungsgemäßen Verfahrens kann demgemäß die Blendenkante zum Einstellen des Kontrasts in einer Richtung quer zur optischen Achse positioniert werden. Hierzu sind bei der erfindungsgemäßen Vorrichtung zur Durchlichtbeleuchtung besonders bevorzugt geeignete Mittel zum variablen Positionieren der Blendenkante in einer Richtung quer zur optischen Achse vorhanden.

Die erfindungsgemäßen Vorteile werden in besonderer Weise erreicht, wenn die Blendenkante in einer Ebene der wirksamen Eintrittspupille des Objektivs positioniert ist.

Besonders bevorzugt werden Einstellungen der Ablenkeinrichtung, der mindestens einen Blendenkante, weiterer Blenden und/oder weiterer optischer Komponenten abhängig von einer festgestellten Konfiguration von vorhandenen, insbesondere optischen, Komponenten, automatisiert vorgenommen. Beispielsweise kann automatisch erkannt werden, welches Objektiv aktiv und welche Zoomstellung eingestellt ist und prinzipiell auch um welchen Mikroskoptyp es sich handelt.

Bei einem erfindungsgemäßen Mikroskopsystem ist hierzu zweckmäßig eine Speichereinrichtung vorhanden, in welcher Einstellungen der Durchlichteinrichtung und des Lichtmikroskops, insbesondere der Ablenkeinrichtung und/oder der mindestens einen Blendenkante, abgespeichert werden.

Bei einer besonders einfach aufgebauten Variante sind zwischen der Blendenkante und der Probe gar keine strahlfokussierenden Komponenten, insbesondere gar keine strahlformenden Komponenten vorhanden.

Mit dem Begriff der optischen Achse ist für die vorliegende Beschreibung im Wesentlichen und in der Regel die optische Achse eines Objektivs eines Lichtmikroskops gemeint, welches in einem Betriebszustand an der erfindungsgemäßen Vorrichtung zur Durchlichtbeleuchtung angeordnet oder positioniert ist.

Wenn es sich bei dem angeschlossenen Lichtmikroskop um ein Stereomikroskop mit zueinander geneigten Mittenlichtstrahlen LM und RM handelt, kann mit dem Begriff der optischen Achse sowohl
i) die optische Achse des Objektives, in dem Falle, dass das Objektiv nur einen Beobachtungskanal symmetrisch erfasst,
ii) die Winkelhalbierende zwischen den beiden Mittenlichtstrahlen, wenn durch das Objektiv beide Beobachtungskanäle erfasst werden, oder aber
iii) der Mittenlichtstrahl nur eines Kanals, wenn nur ein Beobachtungskanal nicht symmetrisch erfasst wird,
bezeichnet werden.

Sodann kann der Begriff der optischen Achse auch im Hinblick auf die erfindungsgemäße Vorrichtung zur Durchlichtbeleuchtung selbst in dem Sinn definiert werden, dass damit im Wesentlichen die Richtung gemeint ist, in welcher das Beleuchtungslicht abgestrahlt wird. In einem gewöhnlichen Fall ist die erfindungsgemäße Vorrichtung zur Durchlichtbeleuchtung als im Wesentlichen flacher Kasten gebildet, der beispielsweise auf einem Labortisch liegt. In diesem Fall weist die optische Achse in Richtung der vertikalen Richtung, also in Richtung der Z-Richtung.

Der Begriff der Halteeinrichtung ist für die Zwecke der vorliegenden Beschreibung funktional auszulegen. Das heißt, dass damit jedes Mittel gemeint ist, mit welchem eine zu untersuchende Probe in irgendeiner Weise relativ zu dem Beleuchtungslichtbündel und der Optik eines anzuschließenden Lichtmikroskops positioniert und fixiert werden kann.

Sodann ist der Begriff der wirksamen Eintrittspupille phänomenologisch auszulegen. Es handelt sich dabei demgemäß nicht um eine errechnete oder theoretische Eintrittspupille des optischen Systems, sondern faktisch um denjenigen Bereich, in welchem der Beleuchtungslichtstrahl, womit nur Strahlungsanteile gemeint sind, welche tatsächlich zur Abbildung beitragen, einen minimalen Querschnitt, also eine Taille, aufweist. Dieser, vorliegend als wirksame Eintrittspupille bezeichnete Flächenbereich, wird durch Messen, also durch Ausprobieren ermittelt. In der Praxis hängt die Lage dieser wirksamen Eintrittspupille neben den verwendeten Optiken auch von der untersuchten Probe und von Probenhalterungen, wie Objektträgern oder sonstigen transparenten Probenauflagen, ab und ist bei gewöhnlichen Zoommikroskopen keine wohldefinierte ebene Fläche.

Der Neigungswinkel der Ablenkeinrichtung, im Wesentlichen also der Neigungswinkel der Prismenfolie gegen die optische Achse, ist ein wesentlicher Parameter zum Einstellen des Kontrasts und damit der Darstellungsqualität. Hierbei haben eingehende Versuche gezeigt, dass dieser Neigungswinkel besonders vorteilhaft an eine jeweils eingestellte Kombination aus Objektiv, Zoomkörper und Zoomfaktor angepasst wird. So kann die Beleuchtung sehr variabel an unterschiedliche optische Situationen und zu untersuchende Proben angepasst werden.

Aus ergonomischen Gründen ist bevorzugt, dass die Ablenkeinrichtung im Betrieb so geneigt ist, dass das Beleuchtungslichtbündel von einem Benutzer weg verkippt wird. Blendungen können so vermieden werden.

Bei einer besonders bevorzugten Variante des erfindungsgemäßen Verfahrens wird die Blendenkante in einer Ebene einer wirksamen Eintrittspupille des Objektivs positioniert. Insbesondere kann dabei die Blendenkante in Richtung quer zur optischen Achse so positioniert werden, dass sie die Eintrittspupille in Richtung quer zur optischen Achse gerade berührt. Hierdurch wird als vorteilhafte technische Wirkung erreicht, dass ein wesentlicher Teil des Beleuchtungslichts, der ohne die Blende Beiträge zum Streulicht hätte liefern können, nunmehr ausgeblendet ist.

Sodann eröffnet die Positionierung der Blendenkante in der Ebene der Eintrittspupille die Möglichkeit, eine Schräglichtbeleuchtung dadurch zu erreichen, dass die Blendenkante einen Teil der Eintrittspupille abdeckt. Besonders bevorzugt beschneidet die Blendenkante bei diesen Ausführungsvarianten das Beleuchtungslichtbündel asymmetrisch. Das bedeutet, dass bestimmte Strahlen des Beleuchtungslichts herausselektiert werden und im Ergebnis eine Schräglichtbeleuchtung erzielt wird. Hierdurch können in der Praxis vorteilhafte Verbesserungen der Kontrastierung erzielt werden.

Gemäß einer weiteren vorteilhaften Variante des erfindungsgemäßen Verfahrens kann demgemäß die Blendenkante zum Einstellen des Kontrasts in einer Richtung quer zur optischen Achse positioniert werden. Hierzu sind bei der erfindungsgemäßen Vorrichtung zur Durchlichtbeleuchtung besonders bevorzugt geeignete Mittel zum variablen Positionieren der Blendenkante in einer Richtung quer zur optischen Achse vorhanden.

Weitere Vorteile und Merkmale der erfindungsgemäßen Vorrichtung, des erfindungsgemäßen Verfahrens und des erfindungsgemäßen Mikroskopsystems werden im Folgenden mit Bezug auf die Figuren erläutert.

Hierin zeigen:
- Fig. 1:: ein Mikroskopsystem nach dem Stand der Technik;
- Fig. 2:: eine Skizze zur Erläuterung einer Durchlichteinrichtung nach dem Stand der Technik;
- Fig. 3:: eine Übersicht über wesentliche Bestandteile des Strahlengangs bei einer erfindungsgemäßen Vorrichtung mit einem ersten Objektiv in einer Seitenansicht;
- Fig. 4:: wesentliche Bestandteile des Strahlengangs bei einer erfindungsgemäßen Vorrichtung in einer Vorderansicht;
- Fig. 5:: wesentliche Bestandteile des Strahlengangs bei einer an einem Stereomikroskop eingesetzten erfindungsgemäßen Vorrichtung in einer Seitenansicht mit einer Blendenkante;
- Fig. 6:: ein Diagramm, in welchem die optimalen Positionen für die Blendenkante in Abhängigkeit des Zoomfaktors aufgetragen sind;
- Fig. 7:: in einer Vorderansicht eine schematische Darstellung von Randstrahlen einer Objektivs in einer Situation, für welche der erfindungsgemäße Einsatz eines Prismenfilms geeignet ist;
- Fig. 8:: in einer Seitenansicht eine schematische Darstellung von Randstrahlen für ein Objektiv in einer Situation, für welche der erfindungsgemäße Einsatz eines Prismenfilms geeignet einsetzbar ist;
- Fig. 10:: eine schematische Skizze zur Erläuterung der Wirkungsweise des Prismenfilms;
- Fig. 11:: ein Detail aus Fig. 10;
- Fig. 12:: ein Diagramm zur Erläuterung von mit und ohne Prismenfilm gemessenen Lichtverteilungen;
- Fig. 13:: ein Ausführungsbeispiel einer erfindungsgemäßen Vorrichtung mit einem Prismenfilm sowie zwei zusätzlichen Blenden;
- Fig. 14:: ein weiteres Ausführungsbeispiel einer erfindungsgemäßen Vorrichtung mit einem Prismenfilm und einer zusätzlichen Blende;
- Fig. 15:: eine Variante der in Fig. 14 gezeigten Vorrichtung;
- Fig. 16:: ein Ausführungsbeispiel einer erfindungsgemäßen Vorrichtung, bei der der Prismenfilm optisch nicht wirksam ist;
- Fig. 17:: ein weiteres Ausführungsbeispiel einer erfindungsgemäßen Vorrichtung, bei der der Prismenfilm optisch nicht wirksam ist;
- Fig. 18:: ein Ausführungsbeispiel einer erfindungsgemäßen Vorrichtung mit zwei Blendenkanten und einem Prismenfilm und
- Fig. 19:: eine schematisierte Darstellung des Ausführungsbeispiels aus Fig. 18.

Gleiche und gleichwirkende Komponenten sind in den Figuren in der Regel mit denselben Bezugszeichen versehen. Hingewiesen wird außerdem auf die Bezugszeichenliste am Ende der Beschreibung.

Aus den bekannten Daten von verschiedenen Objektiven OBJ1, OBJ2, OBJ3 lassen sich die abbildungsseitigen Randstrahlen jeweils in Kombination mit einem motorisierten Zoomkörper MZK, abhängig vom Zoomfaktor β, zusammen mit der Rückprojektion dieser abbildungsseitigen Randstrahlen in den Beleuchtungsraum ermitteln und darstellen.

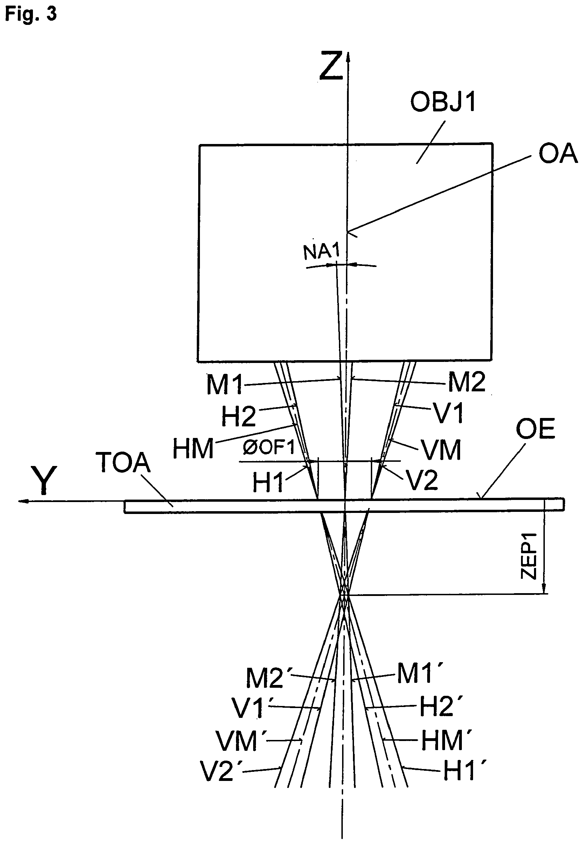

Figur 3 zeigt die Seitenansicht des Strahlengangs mit dem Objektiv OBJ1 aus Figur 1, das zusammen mit dem in Figur 3 nicht dargestellten motorisierten Zoomkörper MZK und dem aktuell wirksamen Zoomfaktor β eine numerische Apertur NA1, einen Objektfelddurchmesser OF1 in der Objektebene OE und eine Z-Koordinate der Eintrittspupille ZEP1 aufweist. Das Koordinatensystem mit den Achsen X, Y, und Z dient der Orientierung.

Ausgehend von der Objektebene OE sind die Grenzlichtstrahlen eingezeichnet, die für die Beschreibung der Abbildung durch das dargestellte Objektiv OBJ1 besonders relevant sind.

Vom hinteren Objektfeldrand gehen die Lichtstrahlen H1 und H2, sowie der mittlere Lichtstrahl HM aus, wobei die Lichtstrahlen H1 und H2 die theoretischen Aperturbegrenzungen des dargestellten Objektivs OBJ1 bei dem gerade wirksamen Zoomfaktor β repräsentieren. Entsprechend gehen die Lichtstrahlen V1, V2 und VM vom vorderen Objektfeldrand aus und kennzeichnen die theoretischen Aperturbegrenzungen des dargestellten Objektivs OBJ1 bei dem gerade wirksamen Zoomfaktor β und den mittleren Lichtstrahl VM.

In der praktischen Anwendung gibt es in der Regel eine transparente Objektauflage TOA, die aufgrund der Brechzahlunterschiede und Dicke einen Strahlversatz, also eine Verlängerung der tatsächlich wirksamen optischen Abstände erzeugt. Daher müssen sowohl die optische Wirksamkeit der transparenten Objektauflage TOA mit einer Dicke DG und einer Brechzahl nG, als auch die entsprechenden optischen Eigenschaften des Objektes OB mit einer Objekthöhe OH und einer Brechzahl nO berücksichtigt werden. Lokale Krümmungen des Objekts OB und/oder Brechzahlschwankungen, zum Beispiel durch Luftblaseneinschlüsse usw., führen ebenfalls zu einer Änderung des optischen Wegs und sind im Prinzip zu berücksichtigen.

Bedingt durch die in der Stereomikroskopie und Makroskopie typischen kostengünstigen Objektiv-Zoomkörper-Kombinationen gibt es keine auskorrigierten und über den Zoombereich feststehenden Pupillenebenen und keine garantierte Eignung für polarisationsoptische Verfahren.

Außerdem gibt es an den beschriebenen typischen kostengünstigen Objektiv-Zoomkörper-Kombinationen OBJ1 mit MZK und OBJ3 mit MZK keine definierten und beim Zoomen feststehenden Eintrittspupillen. Die Realisierung einer solchen Forderung hätten das Optikdesign und die Objektivkonstruktion deutlich erschwert, was mindestens zu einer Verteuerung der Objektive und einer gegebenenfalls nicht akzeptablen Baugröße geführt hätte, sofern sich überhaupt eine Lösung hierfür finden lässt. Somit gibt es praktisch keine ebenen ortsfesten Eintrittspupillen mit den üblichen minimierten Abbildungsfehlern. Die Eintrittspupillen sind somit stark deformiert und wandern bei Variation des Zoomfaktors β und die Lage der Eintrittspupillen hängt stark von der Lichtwellenlänge ab. Berücksichtigt man dass die Objektauflage TOA eine nicht zu vernachlässigende Dicke DG, das Objekt OB eine optisch wirksame Dicke hat und bei gewöhnlichen Zoommikroskopen die Pupille keine wohldefinierte ebene Fläche ist, ergibt sich eine wirksame Eintrittspupille, deren Abstand von der Objektebene OE Zh1 gegenüber der Z-Koordinate der idealisierten Eintrittspupille ZEP1 verschoben ist.

Bei Nutzung eines codierten Objektivwechslers COW gemäß Figur 1 kann für verschiedene Objektive OBJ1 und OBJ3 in einem Stereomikroskop-System ein identisches Objekt OB auf einer identischen transparenten Objektauflage TOA vorausgesetzt werden, so dass auch Zh1 und Zh3 entsprechende Unterschiede aufweisen.

Bei einem durch den rechten Kanal R des Objektivs OBJ1 mit der Anordnung gemäß Figur 3 aufgenommenes Bild ist der Kontrast ohne weitere Mittel sehr schwach, Strukturen und/oder Phasenunterschiede sind so gut wie nicht erkennbar. Das Bild weist dafür eine sehr gute Homogenität hinsichtlich der Helligkeit auf.

In einer ersten Ausführungsform wird die Bildqualität durch die Bereitstellung einer in Richtung der optischen Achse des Beobachtungssystems verschiebbaren Blende im Körper der Durchlichthaube verbessert. Diese Blende lässt sich bei verschiedenen Zoomstellungen auf die Position der Eintrittspupille des optischen Systems einstellen. Durch eine Verschiebung senkrecht zur optischen Achse lassen sich verschiedene Kontrasteffekte erreichen.

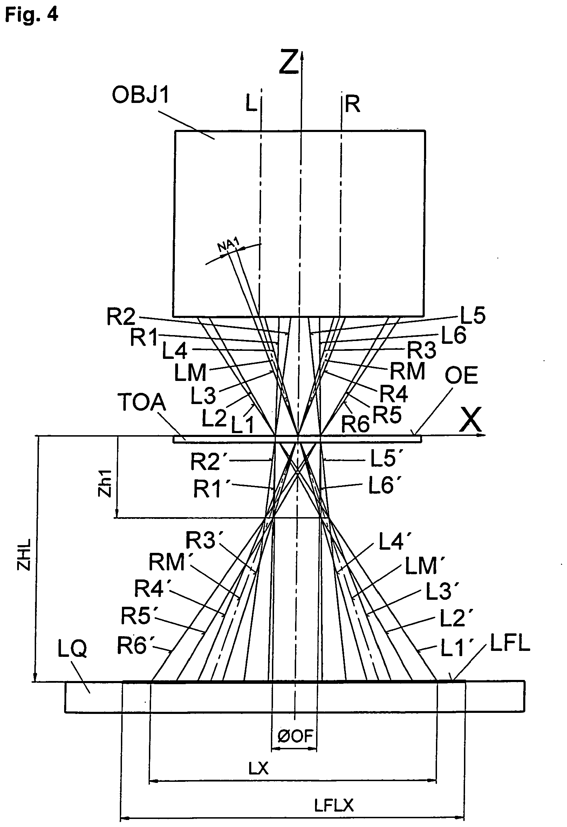

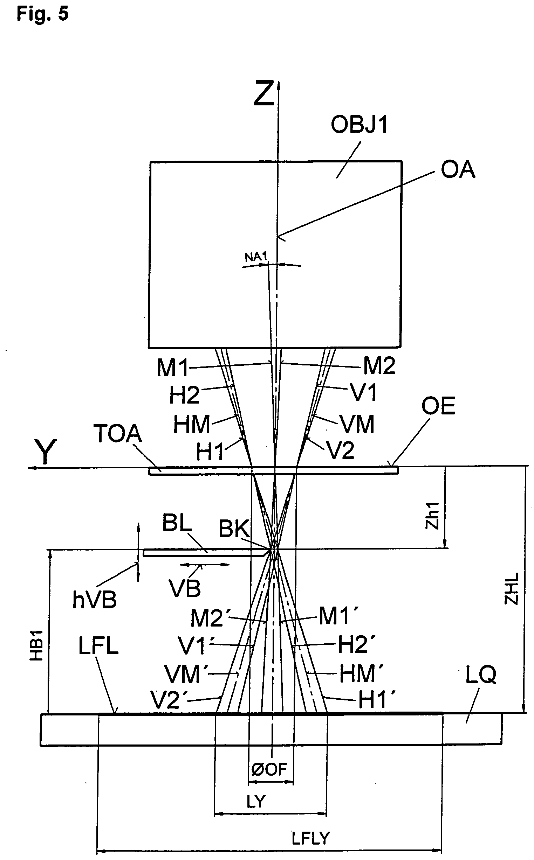

Figur 4 zeigt die Vorderansicht, Figur 5 die Seitenansicht von links einer erfindungsgemäßen Anordnung. Das Koordinatensystem mit den Achsen X, Y, und Z dient der Orientierung. Mit R1 bis R6 sind in Figur 4 rechte Lichtstrahlen und mit L1 bis L6 linke Lichtstrahlen gekennzeichnet.

In Figur 5 sind ausgehend von der Objektebene OE oder von der Oberseite der transparenten Objektauflage TOA die Grenz-Lichtstrahlen eingezeichnet, die für die Beschreibung der Abbildung durch das dargestellte Objektiv OBJ1 besonders relevant sind.

Vom hinteren Objektfeldrand gehen die Lichtstrahlen H1 und H2, sowie der mittlere Lichtstrahl HM aus, wobei die Lichtstrahlen H1 und H2 die theoretischen Aperturbegrenzungen des dargestellten Objektivs OBJ1 bei dem gerade wirksamen Zoomfaktor β repräsentieren. Mit NA1 ist die Objektivapertur des Objektivs OBJ1 in den Figuren 4 und 5 bezeichnet.

Analog hierzu gehen die Lichtstrahlen V1, V2 und VM vom vorderen Objektfeldrand aus, wobei V1 und V2 die theoretischen Aperturbegrenzungen des dargestellten Objektivs OBJ1 bei dem gerade wirksamen Zoomfaktor β kennzeichnen.

Alle in den Beleuchtungsraum zurückprojizierten Lichtstrahlen behalten ihren Namen. Als Merkmal zur Berücksichtigung des Strahlversatzes SV wird jeweils nur ein Hochkomma ergänzt. Aus den mittleren Lichtstrahlen im Abbildungsraum VM und HM resultieren bei Berücksichtigung des Strahlversatzes durch die transparenten Objektauflage TOA gemäß Figur 3 somit die in den Beleuchtungsraum zurückprojizierten Lichtstrahlen VM' und HM'. Mit M1 und M2 sind in Figur 5 mittlere Lichtstrahlen bezeichnet.

Erfindungsgemäß ist eine verstellbare Blende BL mit einer Blendenkante BK im Bauraum zwischen der Objektebene OE oder der Oberseite der transparenten Objektauflage TOA und der Leuchtfläche LFL einer Lichtquelle LQ angeordnet, siehe Figur 5. Diese Blende BL lässt sich in der Höhe, das heißt entlang der Verschieberichtung hVB, so einstellen, dass die Blendenkante BK in einer idealen Z-Blendenlage Zh1 für das aktuell aktive Objektiv OBJ1 in Kombination mit einem Zoomkörper MZK, an dem ein aktueller Zoomfaktor β eingestellt ist, liegt. In Figur 5 ist erkennbar, dass diese Einstellung bereits erfolgt ist, wobei dies nur eine idealisierte Darstellung zur Verdeutlichung des Prinzips ist.

Wie bereits ausgeführt, sind die Eintrittspupillen der meisten Objektive an Zoomsystemen hauptsächlich aus Kostengründen nicht ortsfest und unterliegen keinen speziellen Qualitätsvorgaben. Dies führt dazu, dass die Lage und Form der Eintrittspupille dann nicht klar definiert ist, sie ist zum Teil auch stark abhängig von der Lichtwellenlänge. Der reale Strahlengang ist also deutlich komplexer und entsprechend kompliziert darzustellen. Zur Beschreibung der prinzipiellen Wirkungsweise wird daher nur der idealisierte Strahlengang verwendet.

Wegen der oben erläuterten komplexen Verhältnisse und weiteren unbekannten Einflüssen des Objektes OB und seiner Umgebung, wie zum Bespiel die transparente Objektauflage TOA, Petrischale mit Nährlösung, sind praktische Versuche zur Ermittlung und/oder Einstellung der idealen Z-Blendenlage Zh1 unerlässlich. Hauptsächlich wegen der unbekannten Einflüsse des Objektes OB und seiner Umgebung wird vorzugsweise ein geeignetes Bedienelement, zum Beispiel ein Adjust-Scrollrad SADJ, zur kundenseitigen Variation der Blendenlage senkrecht zur Objektebene OE vorgesehen.

Die ideale Blendenlage ist dadurch gekennzeichnet, dass mindestens eine Blende BL mit mindestens einer linear verlaufenden Blendenkante BK zwischen der Lichtquelle LQ und der Objektebene OE parallel zur Flächennormalen der Objektebene OE in der Richtung hVB und in mindestens einer hierzu senkrecht angeordneten Richtung VB frei positionierbar ist, so dass die Blende BL mit Blendenkante BK durch die Bewegung in Richtung hVB der Flächennormalen der Objektebene OE zur Homogenisierung der Beleuchtung in eine ideale Blendenposition Zh1 gebracht werden kann, in der sie optimal an das aktuell wirksame Abbildungssystem angepasst werden kann. Das Abbildungssystem umfasst einen Zoomkörper MZK mit dem aktuellen Zoomfaktor β, ein Objektiv OBJ1, ein Objekt OB und gegebenenfalls eine transparente Objektauflage TOA. Die Kontraststärke lässt sich durch das Verschieben der Blende BL mit Blendenkante BK senkrecht zur Flächennormalen der Objektebene OE in Richtung VB einstellen, wobei die Blendenkante BK parallel zur Objektebene OE und senkrecht zur Verschieberichtung VB für die Kontraststärkevariation orientiert ist. Prinzipiell sind keine weiteren Mittel zur Homogenisierung der Beleuchtung vorgesehen oder erforderlich.

Bei eingestellter idealer Z-Blendenlage Zh1 ist der Abstand zwischen der Leuchtfläche LFL und der Blende BL dann HB1, der Abstand ZHL ergibt sich gemäß Figur 5 aus ZHL = Zh1 - HB1.

In den Figuren 4 und 5 ist erkennbar, dass die Leuchtfläche LFL der Lichtquelle LQ eine Ausdehnung LFLX in X-Richtung und LFLY in Y-Richtung hat. Für eine vignettierungsfreie homogene Abbildung über das dargestellte Objektiv OBJ1 bei dem gerade wirksamen Zoomfaktor β werden aber nur die Leuchtflächenausdehnungen LX in X-Richtung und LY in Y-Richtung benötigt.

Idealerweise werden die Leuchtfeldabmaße LFLX und LFLY mindestens so groß gewählt, dass für jedes vorhandene Objektiv unter allen vorkommenden Abbildungsbedingungen eine vignettierungsfreie homogene Ausleuchtung möglich ist. Die Form der Leuchtfläche kann hierbei auch an die tatsächlich wirksame Rückprojektion der Lichtstrahlen angepasst werden, dann ergibt sich näherungsweise eine Ellipse mit großer Halbachse in der X-Richtung bei 3D-Beobachtung oder ein Kreis bei 2D-Beobachtung. Mit 2D-Beobachtung ist hierbei die einkanalige Beobachtung der Probe gemeint, mit 3D-Beobachtung entsprechend die Beobachtung mit zwei Kanälen.

Durch die Bewegung der im Abstand Zh1 von der Objektebene OE oder von der Oberseite der transparenten Objektauflage TOA positionierten Blende BL in der Verschieberichtung VB lässt sich die Blende BL mit der Blendenkante BK so in den Beleuchtungsstrahlengang bringen, dass bestimmte Lichtstrahlen ausgeblendet werden können. Die Blende wird vorzugsweise entlang der Y-Achse bewegt, da sie dann für den linken Kanal L und den rechten Kanal R gleichmäßig wirkt. In Figur 4 ist erkennbar, dass eine Bewegung der (nicht dargestellten) Blende im Abstand Zh1 in der X-Richtung nicht die Lichtstrahlen beider Kanäle gleichmäßig ausblenden würde, die Folge wäre eine für 3D-Abbildungen ungeeignete Ausleuchtung. Wird die Blende BL mit der Blendenkante BK gemäß Figur 5, das heißt durch Bewegung im Abstand Zh1 von der Objektebene OE oder von der Oberseite der transparenten Objektauflage TOA in der Verschieberichtung VB, in den Beleuchtungsstrahlengang gebracht, wirkt sie nicht nur auf beide Kanäle gleichmäßig, sondern auch auf alle Punkte des Objektfelds.

Gemäß der Anordnung der Blende BL in Figur 5 berührt die Blendenkante BK die rückprojizierten Lichtstrahlen V2' und H2', die von gegenüberliegenden Objektfeldrändern ausgehen. Somit werden auch alle rückprojizierten Lichtstrahlen zwischen den gegenüberliegenden Objektfeldrändern von der Blendenkante BK berührt. Wird die Blende BL weiter in den Beleuchtungsstrahlengang eingeschoben, resultiert daraus eine gleichmäßige Abdeckung von beleuchtenden Lichtstrahlen über das Objektfeld, das heißt die Beleuchtung bleibt bei abnehmender Helligkeit homogen, wobei der Kontrast deutlich zunimmt. Dies wurde durch praktische Versuche bestätigt. Die weitere Wirkungsweise wird durch die folgenden Figuren mit idealisierter Darstellung des Strahlengangs detaillierter beschrieben.

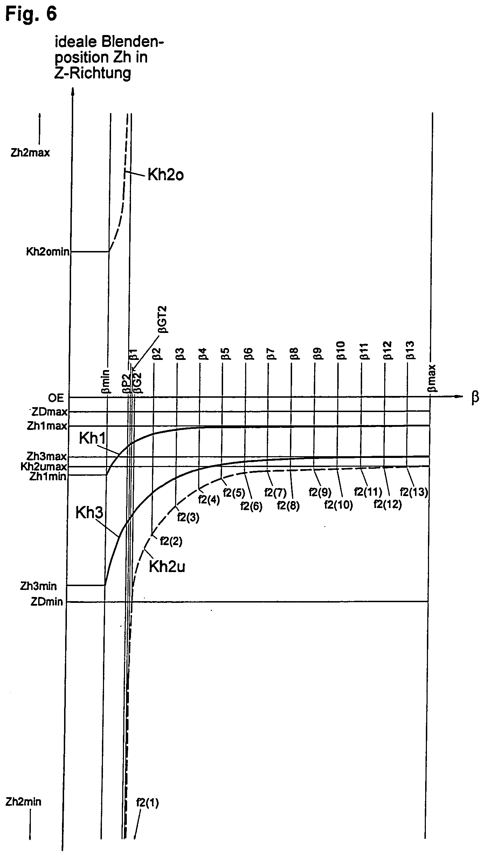

Figur 6 zeigt beispielhaft die ermittelten Kurven für die idealen Z-Blendenlagen Zh zu den drei Objektiven OBJ1, OBJ2 und OBJ3 aus Figur 1 abhängig vom Zoomfaktor β des verwendeten motorisierten Zoomkörpers MZK bezogen auf das XYZ-Koordinatensystem, dessen Ursprung in der Objektebene OE liegt. Die Kurven beginnen jeweils beim kleinsten Zoomfaktor βmin und enden beim größten Zoomfaktor βmax des verwendeten Zoomkörpers MZK aus Figur 1.

Die idealen Z-Blendenlagen der beiden Kurven Kh1 und Kh3 der entsprechenden Objektive OBJ1 und OBJ3 liegen bei typischer Kurvenform im XYZ-Koordinatensystem zwischen ZDmin und ZDmax, der dem Bereich entspricht, in dem eine höhenverstellbare Blende konstruktiv realisierbar ist. Diese Grenzen kennzeichnen also den innerhalb der erfindungsgemäßen Durchlichteinrichtung DL nutzbaren Bauraum für das erfindungsgemäße Kontrastverfahren. Die oberste Blendenposition ZDmax ergibt sich bei normaler Anwendung durch die transparente Objektauflage TOA in der Durchlichteinrichtung DL. Die Blende darf die transparente Objektauflage TOA von unten auf keinen Fall berühren. Die unterste Blendenposition ZDmin resultiert aus der begrenzten Bauhöhe HER der Durchlichteinrichtung DL in Figur 1, die aus Ergonomiegründen unterhalb einer bestimmten Höhe bleiben muss. Das Gehäuse der Durchlichteinrichtung DL aus Figur 1 hat eine Höhe HER von ca. 100mm. Höher sollte eine Durchlichteinrichtung DL ohne weiteres Zubehör nicht sein.

Die minimalen idealen Z-Blendenlagen der Kurven Kh1 und Kh3 heißen Zh1min und Zh3min. Entsprechend heißen die maximalen idealen Z-Blendenlagen dieser Kurven Zh1max und Zh3max. Die minimale ideale Z-Blendenlage des oberen Kurvenabschnitts Kh2o ist mit Kh2omin gekennzeichnet und die maximale ideale Z-Blendenlage des unteren Kurvenabschnitts Kh2u mit Kh2umax.

Das Objektiv OBJ2 aus Figur 1 hat einen grundsätzlich anderen Kurvenverlauf, der typisch ist für bestimmte Objektive OBJ. In Figur 6 ist erkennbar, dass die Kurve für das Objektiv OBJ2 aus zwei Kurvenabschnitten Kh2o und Kh2u besteht. Zwischen diesen Kurvenabschnitten gibt es beim Zoomfaktor βP2 eine Polstelle, das heißt hier springt der Kurvenverlauf vom oberen Kurvenabschnitt Kh2o von plus Unendlich zum unteren Kurvenabschnitt Kh2u nach minus Unendlich.

Mit f2(1), f2(2) bis f2(13) sind ideale Blendenpositionen in Z-Richtung für Vergrößerungen β1, β2 bis β13 angegeben, welche mit dem Objektiv OBJ2 am motorisierten Zoomkörper MZK bestimmt worden sind.

Die minimalen und maximalen idealen Z-Blendenlagen der Kurvenabschnitte Kh2u und Kh2o, Zh2min und Zh2max, befinden sich somit im Unendlichen oder liegen praktisch so weit weg, dass die entsprechende ideale Z-Blendenlage konstruktiv nicht mehr eingestellt werden kann. Im oberen Kurvenabschnitt Kh2o ist die ideale Z-Blendenlage sowieso nicht erreichbar, da die Blende BL mit der Blendenkante BK oberhalb der Objektebene OE angeordnet werden müsste. Im unteren Kurvenabschnitt Kh2u lässt sich die ideale Z-Blendenlage erst ab dem Zoomfaktor βG2 sicherstellen, dann befindet sie sich gerade in der Grenzstellung ZDmin. Somit lässt sich das beschriebene Kontrastierungsverfahren zwischen den Zoomfaktoren βmin und βG2 nicht mit allen Vorteilen anwenden, hierfür ist vorzugsweise ein anderes geeignetes Kontrastierungsverfahren zu ermitteln.

Anhand von Figur 6 wurde dargestellt, dass das Objektiv OBJ2 aus Figur 1 einen grundsätzlich anderen Kurvenverlauf aufweist, als die Objektive OBJ1 und OBJ3. Der Kurvenverlauf von Objektiv OBJ2 ist typisch für eine gewisse Anzahl weiterer Objektive OBJ.

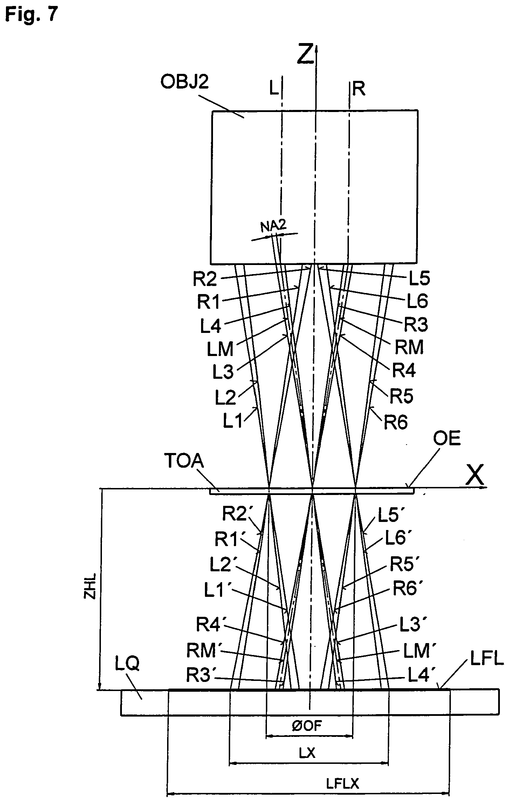

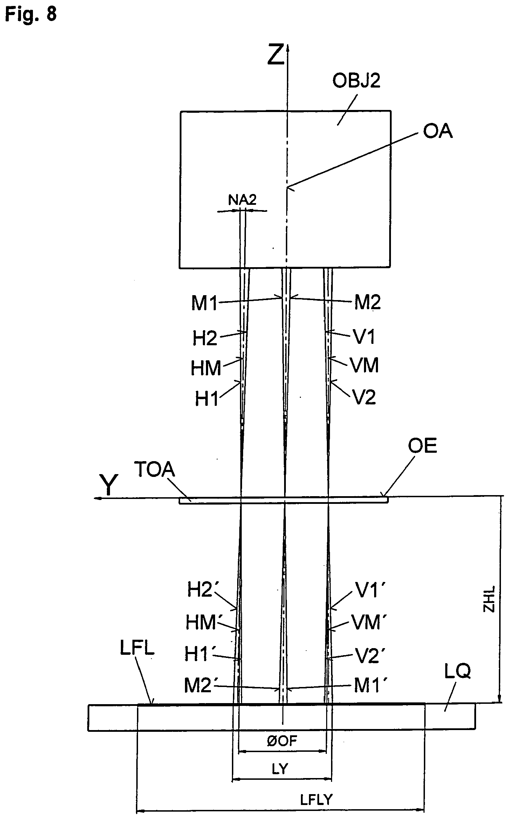

Zur Verdeutlichung dieser Problematik sind in den Figuren 7 und 8 ausgehend von der Objektebene OE beziehungsweise von der Oberseite der transparenten Objektauflage TOA die Grenzlichtstrahlen eingezeichnet, die für die Beschreibung der Abbildung durch das dargestellte Objektiv OBJ2 besonders relevant sind.

Vom hinteren Objektfeldrand gehen die Lichtstrahlen H1, H2 und der mittlere Lichtstrahl HM aus, wobei die Lichtstrahlen H1 und H2 die theoretischen Aperturbegrenzungen des dargestellten Objektivs OBJ2 bei dem gerade wirksamen Zoomfaktor β repräsentieren. Die Objektivapertur des Objektivs OBJ2 in den Figuren 7 und 8 ist NA2.

Analog hierzu gehen die Lichtstrahlen V1, V2 und VM vom vorderen Objektfeldrand aus, wobei V1 und V2 die theoretischen Aperturbegrenzungen des dargestellten Objektivs OBJ1 bei dem gerade wirksamen Zoomfaktor β kennzeichnen.

In den Figuren 7 und 8 ist erkennbar, dass die Leuchtfläche LFL der Lichtquelle LQ eine Ausdehnung LFLX in X-Richtung und LFLY in Y-Richtung hat. Für eine vignettierungsfreie homogene Abbildung über das dargestellte Objektiv OBJ2 bei dem gerade wirksamen Zoomfaktor β werden aber nur die Leuchtflächenausdehnungen LX in X-Richtung und LY in Y-Richtung benötigt.

Die Darstellungen in den Figuren 7 und 8 beziehen sich auf einen motorisierten Zoomkörper MZK mit einem Objektiv OBJ2 gemäß Figur 1, wobei als aktueller Zoomfaktor βP2 gemäß Figur 6 wirksam ist.

In den Figuren 7 und 8 lässt sich gut erkennen, dass es im verfügbaren Bauraum keine zugängliche ideale Z-Blendenlage gibt, in die sich eine Blende BL mit einer Blendenkante BK gemäß Figur 5 sinnvoll anordnen ließe. Das Einschieben einer Blende in der X- oder der Y-Richtung würde wegen der hierdurch ausgeblendeten Lichtstrahlen zu einer Abdunkelung im entsprechenden Objektfeldbereich führen, das heißt die Beleuchtung würde aufgrund der einseitigen Ausleuchtung stark inhomogen werden. Beispielsweise würde das Einbringen einer Blende aus der positiven Y-Richtung zunächst die hinteren Lichtstrahlen H1, HM und H2 vollständig ausblenden, wodurch die hintere Begrenzung des Objektfeldes total abgedunkelt werden würde.

Das Problem der nichtzugänglichen Beleuchtungspupille wird durch die Verwendung eines Prismenfilmes für die Veränderung der Lichtverteilung umgangen.

Gekennzeichnet ist hier zusätzlich der Abstand ZHL von der Leuchtfläche LFL zur Objektebene OE beziehungsweise zur Oberseite der transparenten Objektauflage TOA.

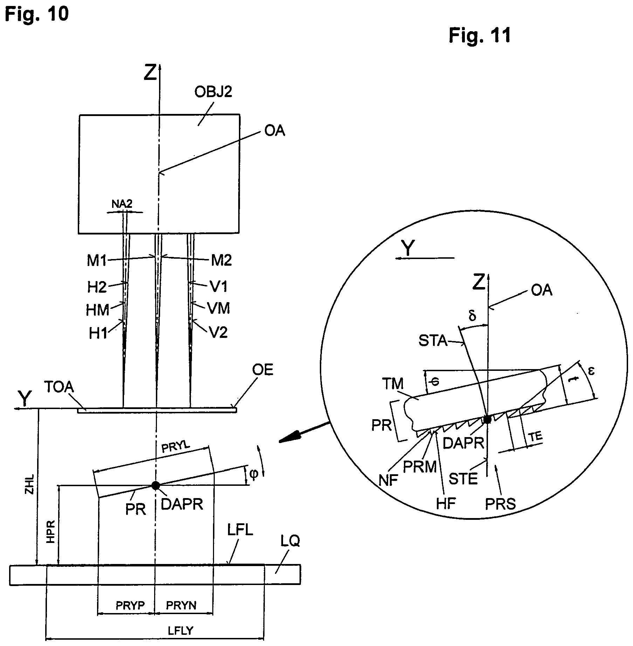

Die Figur 10 zeigt die Ansicht aus Figur 8, wobei die zurückprojizierten Lichtstrahlen nicht dargestellt sind. Erfindungsgemäß sind Mittel zwischen der Lichtquelle LQ und der transparenten Objektauflage TOA vorgesehen, die das Beleuchtungslicht in eine andere Lichtverteilung überführen.

Im Abstand HPR von der Leuchtfläche LFL der Lichtquelle LQ befindet sich die Drehachse DAPR, um die ein Prismenfilm PR gedreht oder gekippt werden kann. Wegen des aktuellen Neigungswinkels ϕ gegenüber der Objektebene OE lässt sich die wirksame Länge des Prismenfilms PRYL auch als Projektion auf die Objektebene OE bzw. auf die Y-Achse beschreiben. Der Anteil von PRYL auf die positive Y-Halbachse ist PRYP, der Anteil von PRYL auf die negative Y-Halbachse ist mit PRYN bezeichnet.

Figur 11 zeigt eine vergrößerte Detailansicht des Prismenfilms PR und verdeutlicht seine Wirkungsweise. Der in der optischen Achse OA eintretende Lichtstrahl STE trifft auf die Hauptflanke HF eines Mikroprismas PRM aus einer Mikroprismenstruktur PRS mit der Teilung TE sowie dem Prismenwinkel ε. Der Lichtstrahl verlässt den Prismenfilm PR als austretender Lichtstrahl STA unter einem Ablenkungswinkel δ gegenüber der optischen Achse OA, das heißt gegenüber seiner ursprünglichen Richtung als einfallender Strahl STE. Die Mikroprismen PRM haben jeweils auch eine Nebenflanke NF, die zusammen mit der Hauptflanke in der Praxis eine bestimmte Strahlumlenkung bewirkt. Mit der Neigung ϕ des Prismenfilms PR verändern sich nicht nur der Ablenkungswinkel δ durch die über die Hauptflanke HF abgelenkten Strahlen STE, sondern auch die Lichtanteile zwischen der Hauptflanke HF und der Nebenflanke NF. Außerdem sind die Übergänge zwischen den Hauptflanken HF und den Nebenflanken NF jeweils durch sprunghafte Winkeländerungen gekennzeichnet, die ebenfalls vorteilhafte Kontrastierungseffekte bewirken.

Wegen der Vielzahl von benachbarten Mikroprismenstrukturen PRS gilt dieses Ablenkverhalten auch für parallel einfallende Lichtstrahlen.

Erfindungsgemäß lässt sich zum Beispiel ein Prismenfilm PR des Typs IDF II von der Firma 3M verwenden. Dieser besteht aus einem Trägermaterial TM, auf das eine Mikroprismenstruktur PRS aus Mikroprismen PRM aufgebracht ist, so dass sich eine Gesamtdicke von t ergibt. Mit dieser Anordnung beträgt bei einem Neigungswinkel ϕ des Prismenfilms PR von 0° der Ablenkungswinkel δ von ca. 20°. Die Struktur des Prismenfilms setzt sich dabei in X-Richtung fort.

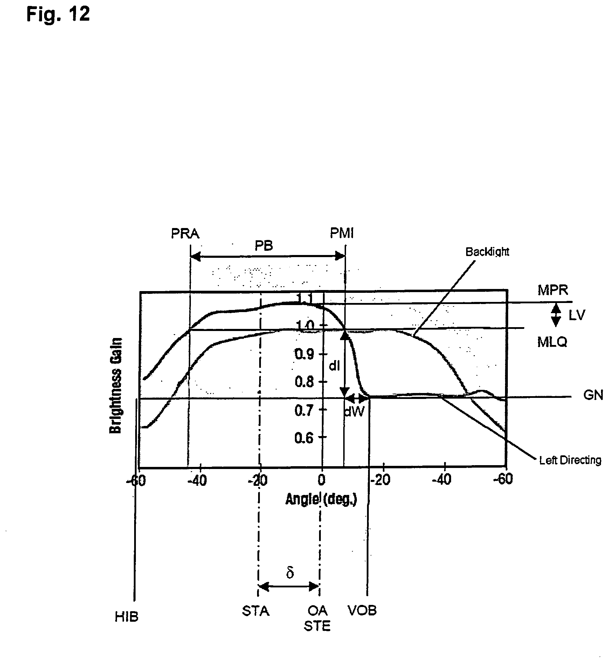

Zur Verdeutlichung der Funktion ist in Figur 12 die von der Firma 3M veröffentlichte gemessene Umlenkcharakteristik des IDF II-Prismenfilms PR dargestellt. Die vorab beschriebene Umlenkcharakteristik in Figur 11 gilt nur für die Haupt-Ausbreitungsrichtung STA des Beleuchtungslichtes unter der Voraussetzung eines senkrecht zur Leuchtfläche LFL orientierten einfallenden Lichtstrahls STE auf die allein wirkende Hauptflanke HF des Mikroprismas PRM aus der Mikroprismenstruktur PRS. Ausgehend von einer Lichtquelle LQ zeigt die Darstellung in Figur 12 über dem Winkel nach dem Prismenfilm zwei Intensitätskurven:
• die Lichtverteilung einer Lichtquelle LQ ohne Prismenfilm; Kurve: "Backlight",
• die Lichtverteilung derselben Lichtquelle LQ mit Orientierung der Ablenkung nach links; Kurve: "IDF II Left Directing"

Vorteilhafterweise wird der Prismenfilm PR so orientiert, dass die Ablenkung immer vom Benutzer weg geneigt ist, so dass eine Blendung ausgeschlossen werden kann. Dies entspricht gemäß Figur 10 einer Ablenkung in die YZ-Ebene mit positiven Halbachsen. In der Darstellung in Figur 12 wird deshalb auch nur eine Richtung betrachtet: die Orientierung der Ablenkung nach links; Kurve: "Left Directing".

Die Lichtverteilung für das umverteilte Beleuchtungslicht hat eine Haupt-Ausbreitungsrichtung STA, die von der ursprünglichen Haupt-Ausbreitungsrichtung des Beleuchtungslichts STE verschieden ist. Die Richtung der Mittenachse des Abbildungstrahlengangs OA weicht von der Richtung der Haupt-Ausbreitungsrichtung des umverteilten Beleuchtungslichts STA, das das Objekt durchscheint, um den Ablenkungswinkel δ ab. Dadurch wird eine einseitige Schräglichtbeleuchtung erreicht. Das heißt aus einer ursprünglich symmetrischen Lichtverteilung entsteht eine deutlich erkennbare asymmetrische Lichtverteilung. Die Lichtverteilung bewirkt keine grundsätzliche Einschränkung des Winkelspektrums gegenüber der ursprünglichen Haupt-Ausbreitungsrichtung des Beleuchtungslichts OA, sondern nur eine auf ein deutlich reduziertes Grundniveau GN abgesenkte Intensität in bestimmten Winkelbereichen und eine Lichtverstärkung im verbleibenden Winkelbereich zwischen der vorderen Begrenzung VOB und der hinteren Begrenzung HIB.

Die große maximale Differenz zwischen den verschiedenen Niveaus der Lichtintensität (MPR gegenüber GN) von dicht benachbarten Winkelbereichen (ab VOB bis etwa OA) führt in Kombination mit der Schräglichtbeleuchtung zu einer deutlich sichtbaren Kontrastverstärkung.

Außerdem bewirkt der Prismenfilm PR in einem relativ großen Winkelbereich durch die Umverteilung des Beleuchtungslichtes eine Lichtverstärkung LV gegenüber dem maximalen Niveau MLQ der Lichtintensität der Lichtquelle LQ ohne Prismenfilm PR. Das heißt, dass bestimmte Lichtanteile, die beim normalen Ausblenden vollständig verschwinden würden, durch die Umverteilung für eine Helligkeits- und Kontrastverstärkung genutzt werden. Das in allen relevanten Winkelbereichen mindestens vorhandene Grundniveau GN der Lichtintensität und die gute Durchmischung der Lichtstrahlen von verschiedenen Bereichen der Mikroprismenstruktur PRS sorgen für eine homogene Beleuchtung mit einer Durchlicht-Hellfeld-Charakteristik. Trotz der Umlenkung über den Prismenfilm PR durch Brechung führt die Durchmischung über verschiedene Bereiche der Mikroprismenstruktur PRS auch zu einer farblich homogenen Beleuchtung.

Angegeben ist in Figur 12 außerdem eine Plateaubreite PB der Lichtintensität des umverteilten Beleuchtungslichtes um die Haupt- Ausbreitungsrichtung STA zwischen den Plateaurändern PMI und PRA. Dabei bezeichnet PMI denjenigen Rand der Plateaubreite PB, der den kleineren Abstand zur ursprünglichen Hauptausbreitungsrichtung STE aufweist. Hingegen kennzeichnet PRA denjenigen Rand der Plateaubreite PB, der den größeren Abstand zur ursprünglichen Hauptausbreitungsrichtung STE aufweist. PB ist durch den Abfall bzw. Anstieg der Lichtintensität auf den Wert MLQ definiert.

Die zu Figur 12 beschriebenen Vorteile lassen sich in besonderer Weise erzielen, wenn der Prismenfilm PR so orientiert wird, dass die Mikroprismenstruktur PRS zur Lichtquelle LQ zeigt. Wenn die Mikroprismenstruktur PRS in Richtung der Objektebene OE orientiert ist, ergibt sich zwar auch eine mittlere Strahlablenkung, die etwa dem Winkel δ entspricht, allerdings gilt dann nicht mehr die Lichtverteilung gemäß Figur 12. Deshalb bezieht sich die erfindungsgemäße Anwendung des Prismenfilms PR vorteilhafterweise auf eine Orientierung der Mikroprismenstruktur PRS in Richtung der Lichtquelle LQ. In dieser Orientierung lässt sich mit dem Winkel ϕ der Kontrast variieren, da sich hierdurch die Umlenkcharakteristik des Prismenfilms PR im nutzbaren Bereich ändert. Diese Änderung der Umlenkcharakteristik über den Winkel ϕ ist sehr vorteilhaft, da sich erst hierdurch auch eine optimale Anpassung an verschiedene optische Abbildungssysteme, das heißt an verschiedene Kombinationen aus Objektiv OBJ und Zoomkörper MZK mit Zoomfaktor β, erreichen lässt. Praktische Versuche haben ergeben, dass die optimalen Einstellungen für den Winkel ϕ für verschiedene optische Abbildungssysteme so unterschiedlich sind, dass eine einheitliche Einstellung mit einem festen Winkel ϕ hierfür nachteilig wäre. Eine Kontrastverbesserung würde zwar erreicht, die Umlenkcharakteristik wäre aber noch nicht optimal.

In Figur 12 ist nur ein Winkelbereich von **±** 60° dargestellt. Durch Versuche wurde festgestellt, dass mit einer Lichtquelle LQ, die im gesamten Winkelbereich von **±** 90° Licht abstrahlt, bei erfindungsgemäßer Verwendung eines IDF II-Prismenfilms PR zusammen mit dieser Lichtquelle LQ auch in den beiden Randwinkelbereichen zwischen 60° und 90° jeweils noch eine gewisse Grundhelligkeit vorhanden ist.

Besonders gute Kontraste liefert eine intensitätsstarke Weißlicht-LED-Flächenleuchte mit einer gerichteten Beleuchtungscharakteristik, das heißt sie strahlt das Licht nicht gleichmäßig in alle Richtungen ab. Die Lichtintensität nimmt stattdessen mit zunehmender Abweichung von der senkrecht zur Leuchtfläche LFL orientierten Achse ab. Das gilt besonders für die Randbereiche. Dabei ergibt sich eine Lichtverteilung, die mit einem angegebenen Nennwert von **±** 30° für den Winkelbereich der Lichtverteilung der Kurve "Backlight" in Figuren 7 und 8 (Lichtquelle ohne Prismenfilm PR) noch relativ ähnlich ist. Auch mit dieser Lichtquelle LQ ist bei erfindungsgemäßer Verwendung des Prismenfilms PR im gesamten Winkelbereich **±** 90° mindestens eine gewisse Grundhelligkeit vorhanden. Dies wurde durch Versuche bestätigt.

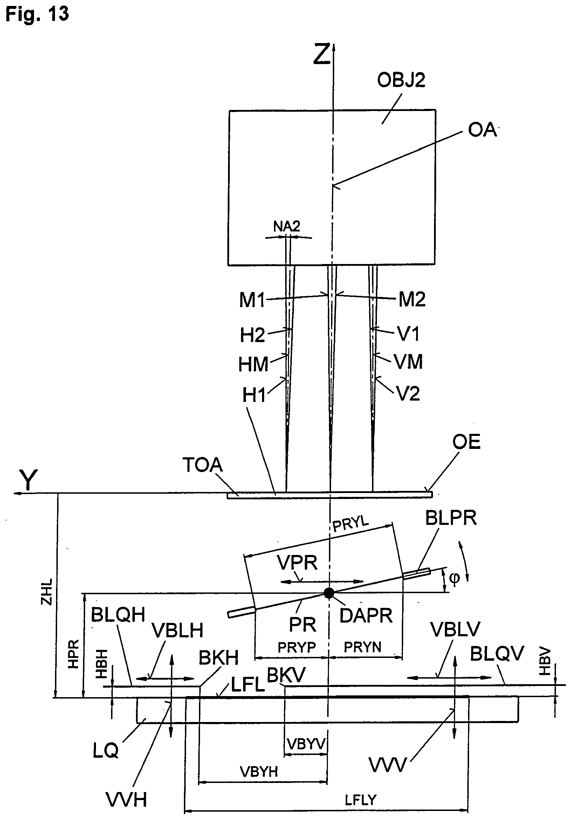

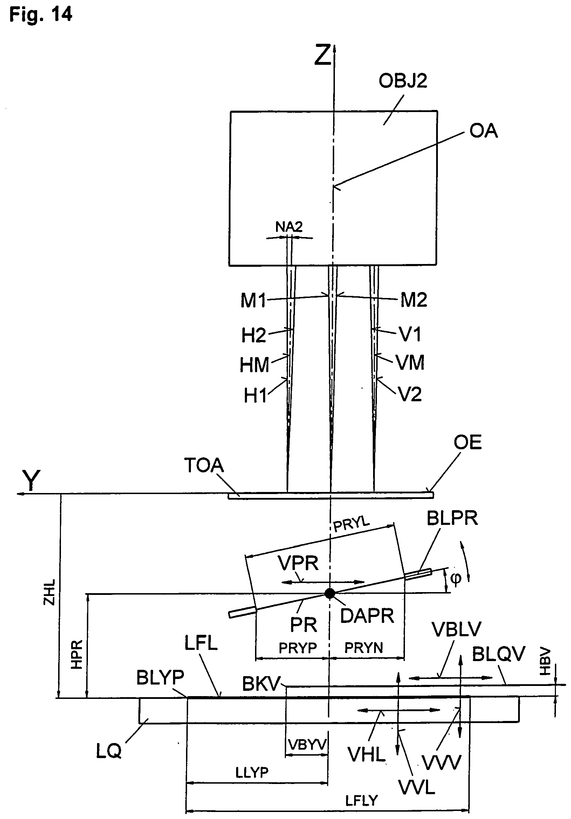

Die Figuren 13 und 14 zeigen Möglichkeiten zur Beeinflussung der Ausgangsbeleuchtung zur weiteren Steigerung des Kontrasts. Hierzu sind jeweils nur die relevanten Seitenansichten von links dargestellt. Es gelten dieselben Bezugszeichen wie in den vorher beschriebenen Figuren.

In Figur 13 ist erkennbar, dass der in Y-Richtung wirksame Anteil LFLY der Leuchtfläche LFL durch eine hintere Blende BLQH und eine vordere Blende BLQV zusätzlich begrenzt wird. Die hintere Blende BLQH lässt sich in den Verschieberichtungen VBLH und VVH positionieren, so dass ihre Blendenkante BKH im Abstand HBH von der Leuchtfläche LFL und im Abstand VBYH von der optischen Achse OA angeordnet ist. Analog hierzu lässt sich die vordere Blende BLQV in den Verschieberichtungen VBLV und VVV positionieren, so dass ihre Blendenkante BKV im Abstand HBV von der Leuchtfläche LFL und im Abstand VBYV von der optischen Achse OA angeordnet ist. Dabei ist zu beachten, dass beide Blendenkanten BKH und BKV in Richtung der positiven Y-Halbachse liegen. Durch eine geeignete Positionierung der Blendenkanten BKH und BKV lässt sich die wirksame Beleuchtung so an die aktuelle optische Systemumgebung anpassen, dass eine deutlich sichtbare Kontrastverbesserung daraus resultiert.

Figur 14 zeigt eine abgewandelte Variante, in der auf eine der beiden verstellbaren Blenden verzichtet werden kann. In diesem Fall ist die hintere Blende BLQH entfallen. Stattdessen kann die Lichtquelle LQ in den Verschieberichtungen VHL und VVL positioniert werden. Die hintere Kante der wirksamen Leuchtfläche LFL wirkt dabei als Blendenkante BLYP. LED-Flächenleuchten, die als Lichtquelle LQ verwendet werden können, haben üblicherweise ein Blechgehäuse, das mit der Leuchtfläche abschließt und somit als Blendenkante BLYP verwendbar ist. Zu beachten ist, dass sich mit einer Positionierung der Lichtquelle LQ in der Verschieberichtung VVL auch der Abstand HBV von der Leuchtfläche LFL zur vorderen Blende BLQV ändert. Das heißt, dass dieser Abstand gegebenenfalls danach noch einmal korrigiert werden muss. Alle anderen Bezeichnungen und Funktionen entsprechen denen aus Figur 13.

Als dritte Ausführungsform ist aber auch ein Array von Lichtquellen in der Lichtquelle LQ denkbar, das selektiv an und ausgeschaltet wird, um die Blendeneffekte zu erzielen.

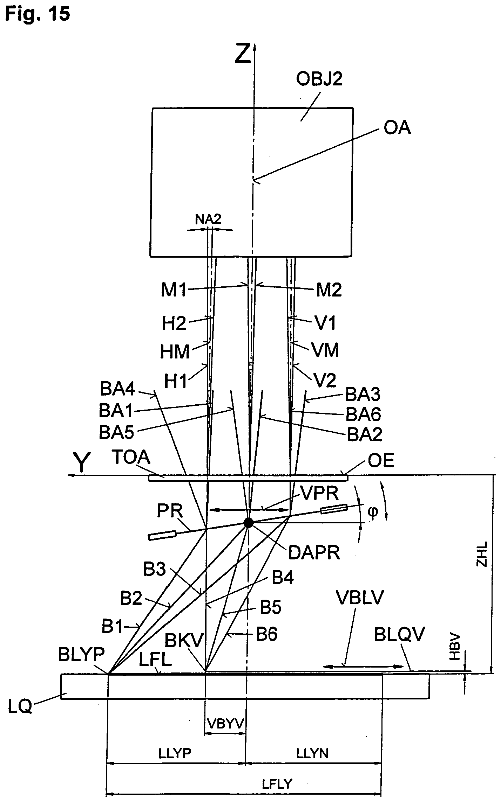

Figur 15 zeigt auf Basis von Figur 14 eine vereinfachte Möglichkeit zur Steigerung des Kontrasts mit Darstellung der entsprechenden Haupt-Ausbreitungsrichtungen des Beleuchtungslichts ausgehend von den wirksamen Blendenkanten BLYP (Beleuchtungs-Lichtstrahlen B1, B2, B3) und BKV (Beleuchtungs-Lichtstrahlen B4, B5, B6). Im Gegensatz zu Figur 14 wird auf eine Möglichkeit zur Positionierung der Lichtquelle LQ verzichtet, das heißt die Blendenkante BLYP ist ortsfest. Außerdem wird der Abstand HBV so klein wie konstruktiv vertretbar gewählt, so dass die vordere Blende BLQV beim Positionieren in der Verschieberichtung VBLV auf jeden Fall noch nicht an der Leuchtfläche LFL oder an benachbarten Gehäuseteilen der Lichtquelle LQ schleift. Dieser Abstand HBV kann konstruktiv fest voreingestellt werden, so dass eine Verschiebemöglichkeit der vorderen Blende BLQV senkrecht zur Leuchtfläche LFL entfallen kann. Somit wird die wirksame Leuchtfläche in Y-Richtung LFLY durch die vordere Blendenkante BKV und die Leuchtfeldbegrenzung BLYP in der Y-Richtung verkleinert.

Mit LLYN ist hier die Ausdehnung der Leuchtfläche LFL in negativer Y-Richtung angegeben und mit LLYP die Ausdehnung in positiver Y-Richtung.

Der Abstand von BLYP zur optischen Achse OA ist hier LLYP. Der Abstand von BKV zur optischen Achse OA ist VBYV. Zu beachten ist wieder, dass beide wirksamen Blendenkanten BLYP und BKV in Richtung der positiven Y-Halbachse liegen.

Aus den Beleuchtungslichtstrahlen B1 bis B6 werden die entsprechenden durch den Prismenfilm PR, der in der Richtung VPR verschiebbar ist, umgelenkten Beleuchtungslichtstrahlen BA1 bis BA6, wobei diese zur groben Orientierung nur die Hauptausbreitungsrichtung des Beleuchtungslichts nach dem Prismenfilm wiedergeben. In Figur 15 ist erkennbar, dass die zurückprojizierten Strahlen V1, VM, V2, M1, OA, M2, H1, HM, H2, die kennzeichnend sind für die Abbildung durch das Objektiv OBJ2 bei Benutzung des motorisierten Zoomkörpers MZK mit dem eingestellten Zoomfaktor β und der daraus resultierenden wirksamen Apertur NA2, innerhalb des Winkelbereichs liegen. Dieser Winkelbereich wird jeweils durch die beiden abgelenkten Beleuchtungslichtstrahlen aufgespannt, die aus den beiden Beleuchtungslichtstrahlen ausgehend von den beiden Blendenkanten BLYP und BKV resultieren.

Durch die zusätzlich wirksame Einengung der Leuchtfläche LFL lassen sich somit bestimmte Lichtanteile ausblenden, die überwiegend nicht nutzbares Streulicht verursachen oder darstellen. Dies wurde durch Versuche nachgewiesen. Dabei bleibt die durch die erfindungsgemäß zur Lichtquelle LQ zeigende Mikroprismenstruktur PRS kontraststeigernde Lichtverteilung mit einer minimalen Grundhelligkeit grundsätzlich erhalten. Das heißt auch die Ausblendung einzelner Lichtanteile führt nicht zu einer inhomogenen Beleuchtung und/oder zu Auflösungsverlusten. Da sich die störenden Lichtanteile mit der optisch wirksamen Systemumgebung verändern können, ist es vorteilhaft, wenn sich zumindest die vordere Blende BLQV in der Verschieberichtung VBLV frei positionieren lässt.

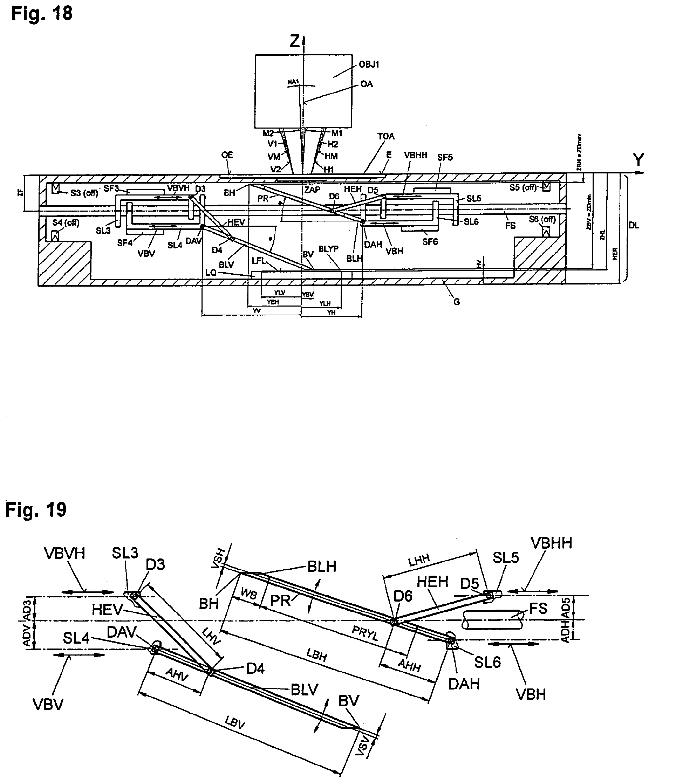

Die Figuren 18 und 19 zeigen ein Ausführungsbeispiel für eine erfindungsgemäße Vorrichtung zur Durchlichtbeleuchtung DL in dem gemäß Figur 1 vom Benutzer aus gesehenen Rechtssystem also X-Achse nach rechts, Y-Achse nach hinten und Z-Achse nach oben, mit einer detaillierten Darstellung der Hebelmechanik. Es gelten weiterhin dieselben Bezugszeichen.

Dieses Ausführungsbeispiel ist dadurch gekennzeichnet, dass die beiden Blenden/Schlitten-Systeme grundsätzlich erhalten bleiben, so dass das Kontrastverfahren mit der höhenverstellbaren Blende weiterhin benutzbar ist. Allerdings befindet sich in der Blende BLH nun das erfindungsgemäße Mittel zur Kontrastierung, also der erfindungsgemäße Prismenfilm PR. Die gesamte erfindungsgemäße Anordnung mit Prismenfilm PR entspricht der optischen Wirkungsweise, die vorab anhand der Figuren 10, 11, 12, 15 beschrieben wurde.

Mit der Änderung der Z-Koordinate ZBH der Blende BLH ändert sich auch der Winkel ϕ zwischen dem Prismenfilm PR und der Objektebene OE, so dass der Prismenfilm PR erfindungsgemäß um eine Drehachse parallel zur Objektebene gekippt werden kann. Diese Drehachse heißt nun DAH. Sie ist aber hinsichtlich der Funktionsweise vergleichbar mit der vorab beschriebenen Drehachse DAPR, so dass der Schutzbereich dieser Anmeldung auch die Drehachse DAH umfasst.

In Figur 19 ist erkennbar, dass der Prismenfilm eine wirksame Länge PRYL hat. Zwischen dem Prismenfilm PRYL und der Blendenkante BH gibt es eine wirksame Blendenbreite WB. Diese ist vorzugsweise so dimensioniert, dass eine Abdeckung des Strahlquerschnitts noch möglich ist, ohne dass der Prismenfilm PRYL die Funktion eines Kontrastverfahrens, bei dem die Blendenkante in Abhängigkeit einer wirksamen Eintrittspupille in Richtung der optischen Achse positioniert wird, nennenswert stört.

Die beiden Blenden werden über je zwei Schlitten, nämlich SL3 und SL4 sowie SL5 und SL6, bewegt. Zur Erfassung der Position der Schlitten sind jeweils ein Positionssensor S3, S4, S5 und S6 sowie jeweils ein Positionshilfssensor S5H und S6H vorhanden. Durch Schaltfahnen SF3, SF4, SF5 und SF6 kann die Position der Schlitten zu den Positionssensoren S3, S4, S5 und S6 festgestellt werden.

In der in Figur 18 dargestellten Position der Schlitten werden die Positionssensor S3, S4, S5 und S6 nicht angesprochen und melden demgemäß "off".

Angegeben sind außerdem: mit D3 eine Drehachse für einen Hebel HEV, über den der Schlitten SL3 mit der Blende BLV verbunden ist, wobei sich die Drehachse D3 an der Verbindungsstelle zwischen dem Hebel HEV und dem Schlitten SL3 befindet, mit D4 eine Drehachse für den Hebel HEV an der Verbindung zur Blende BLV, mit D5 eine Drehachse für einen Hebel HEH, über den der Schlitten SL5 mit der Blende BLH verbunden ist, wobei sich die Drehachse D5 an der Verbindungsstelle zwischen dem Hebel HEH und dem Schlitten SL5 befindet, und mit D6 eine Drehachse für den Hebel HEH an der Verbindung zur Blende BLH.

LHH bezeichnet die Länge des hinteren Hebels HEH zwischen den Drehachsen D5 und D6. LHV kennzeichnet die Länge des vorderen Hebels HEV zwischen den Drehachsen D3 und D4.

Mit FS ist eine Führungsbahn einer Linearführung, z.B. über eine Führungsstange, gekennzeichnet. An der Führungsbahn FS sind die Schlitten SL3, SL4, SL5 und SL6 beweglich. Die Führungsbahn befindet sich an der Z-Koordinate ZF bezüglich der Objektauflage.

Die hintere Blende ist zur Variation des Kontrastes quer zur optischen Achse OA verschiebbar. Dies wird durch eine synchrone Bewegung der Schlitten SL5 und SL6 entlang der Verschieberichtung VBH beziehungsweise VBHH erreicht.

Entsprechendes gilt für die vordere Blende, wobei die Verschieberichtungen VBV und VBHV in Figur 18 angegeben sind.

Die Komponenten der Durchlichteinrichtung DL sind in einem Gehäuse G angeordnet.

Zudem sind in Figur 19 der Abstand AD3 zwischen der Führungsbahn FS und der Drehachse D3 sowie der Abstand AD5 zwischen der Führungsbahn FS und der Drehachse D5 angegeben. ADV kennzeichnet den Abstand zwischen der Führungsbahn FS und der Drehachse DAV, während mit ADH der Abstand zwischen der Führungsbahn FS und der Drehachse DAH gekennzeichnet ist. Weiterhin sind die Hebellänge AHH zwischen den Drehachsen DAH und D6 sowie die Hebellänge AHV zwischen den Drehachsen DAV und D4 angegeben.

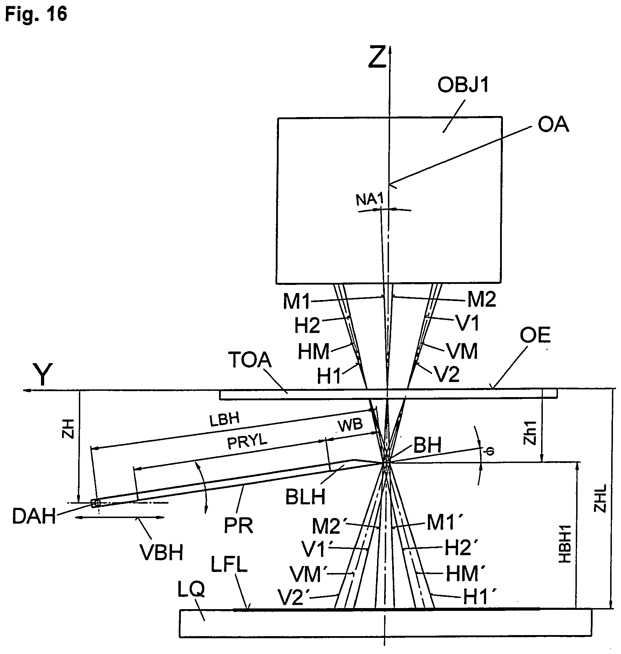

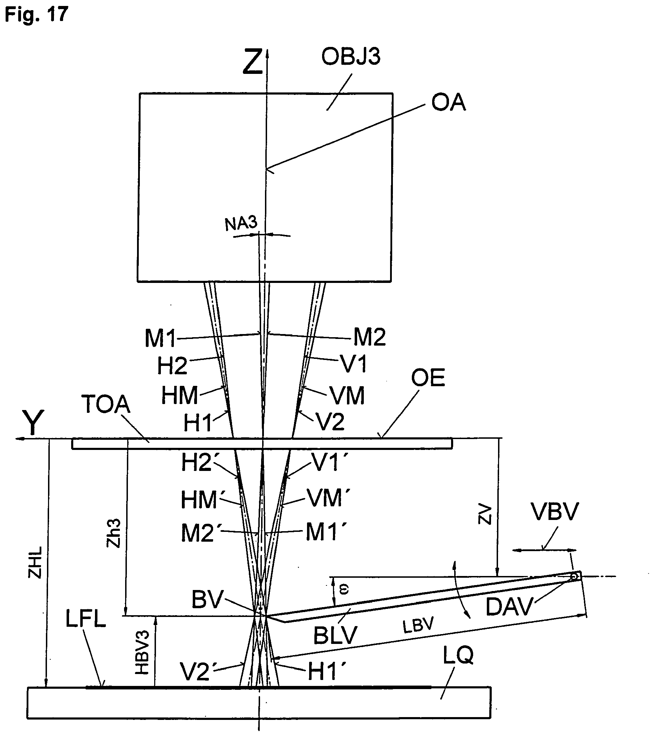

YH und ZH (siehe auch die Figuren 16 und 17) kennzeichnen die momentane Y-und Z-Koordinate der hinteren Drehachse DAH, YBH benennt die momentane Y-Koordinate der hinteren Blendenkante BH, YBV bezeichnet die momentane Y-Koordinate der vorderen Blendenkante BV und YBV kennzeichnet die momentane Y-Koordinate der vorderen Blendenkante BV. YV und ZV benennen die momentane Y- und Z-Koordinate der vorderen Drehachse DAV.

Dargestellt ist zudem optional in eine Adapterplatte AP einlegbares Zubehör ZAP beziehungsweise die Schnittstelle hierfür. Bei dem Zubehör ZAP kann es sich beispielsweise um Polarisationsfilter, Einlegeblenden oder Farbfilter handeln.

Die Figuren 16 und 17 zeigen die Wirkungsweise der erfindungsgemäßen Einrichtung gemäß den Figuren 18 und 19, also bei Anwendung eines Kontrastverfahrens, bei dem eine Blendenkante in Richtung der optischen Achse zur Einstellung des Kontrasts positioniert wird, für die beiden verschiedenen Objektive OBJ1 und OBJ3. Dabei ist der in der Blende BLH integrierte Prismenfilm PR in dieser Anwendung optisch nicht wirksam. Es gelten weiterhin dieselben Bezugszeichen und Beschreibungen zu den vorab dargestellten Figuren.

In Figur 16 ist zudem der Höhenabstand HBH1 angegeben, welchen den Abstand von der Leuchtfläche LFL zur hinteren Blendenkante BH in der idealen Z-Blendenlage für das Objektiv OBJ1 am Zoomkörper MZK mit dem aktuellen Zoomfaktor β bezeichnet.

Entsprechend ist in Figur 17 mit HBV3 der Höhenabstand von der Leuchtfläche zur vorderen Blendenkante BV in der idealen Z-Blendenlage für das Objektiv OBJ3 am Zoomkörper MZK mit dem aktuellen Zoomfaktor β benannt.

In Figur 16 ist weiterhin mit LBH der Abstand zwischen der hinteren Blendenkante BH und dem Drehpunkt DAH der hinteren Blende BLH angegeben. Analog ist in Figur 17 mit LBV der Abstand zwischen der vorderen Blendenkante BV und dem Drehpunkt DAV der vorderen Blende BLV gekennzeichnet.

Die einstellbaren Z-Blendenkoordinaten der beiden Blenden/Schlitten-Systeme können auch unterschiedliche Bereiche der gesamten Einstellmöglichkeiten der Z-Blendenkantenkoordinaten abdecken, so dass der Bauraum zwischen ZDmin und ZDmax in zwei Bereiche aufgeteilt ist.

In einer anderen Variante können zumindest größere Teilbereiche oder der komplette Bauraum zwischen ZDmin und ZDmax von beiden Blenden benutzt werden, so dass in den gemeinsamen Bereichen wahlweise eine normale Blendenorientierung ohne Azimutwinkel oder eine gegenüber der normalen Azimutausrichtung invertierte, das heißt um 180° gedrehte, Blendenorientierung einstellbar ist.

Ein Bild, das durch den rechten Kanal R des Objektivs OBJ2 mit Anordnung gemäß den Figuren 7 und 8 aufgenommen wurde, bei dem sich kein erfindungsgemäßes Mittel zur Kontrastverstärkung zwischen der Lichtquelle LQ und der Objektebene OE befindet und bei dem als Objekt OB ein Zebrafisch-Präparat mit Trägerglas verwendet wird, ist relativ kontrastarm, es sind kaum Strukturen und/oder Phasenobjekte erkennbar.

Wenn man mit demselben Objekt OB und derselben optisch wirksamen Objektiv-Zoomkörper-Kombination aus Objektiv OBJ2, Zoomkörper MZK mit Zoomfaktor β weitere Bilder aufnimmt, lassen sich diese Bilder direkt miteinander vergleichen.

Ein Bild des Objekts, bei dem eine handelsübliche VisiLED-HCT-Basis, die mit einer nur in der Y-Richtung verschiebbaren Blende in einer festen Z-Koordinate arbeitet, zur Beleuchtung verwendet wurde, ist stark inhomogen. Nur in einer Übergangszone zwischen einem unteren dunklen und einem oberen hellen Bildbereich hat sich der Kontrast gegenüber dem Bild, welches ohne erfindungsgemäße Mittel zur Kontrastverstärkung aufgenommen wurde, verbessert.

Bei einem Bild, für welches die erfindungsgemäße Einrichtung mit einem Strahlengang wie in den Figuren 10, 11, 12, 18, 19 gezeigt, zur Beleuchtung verwendet wurde und wobei die in den Figuren 18 und 19 dargestellte Blende BLV vollständig aus dem Strahlengang gefahren wurde, so dass sie während der Kameraaufnahme nicht wirksam war, ist das Bild noch immer homogen. Gegenüber dem Bild, welches ohne erfindungsgemäße Mittel zur Kontrastverstärkung aufgenommen wurde, hat sich der Kontrast aber deutlich verbessert.

Erreicht wurde dies durch das folgende Einstellverfahren:
Die Blende BLH aus den Figuren 18 und 19 wird so positioniert, dass der Prismenfilm PR vorzugsweise ohne Beschnitt durchstrahlt wird. Anschließend wird die Z-Koordinate ZBH so variiert, dass der Kontrast einen Maximalwert annimmt.

Bei einem Bild des Objekts, bei dem die erfindungsgemäße Einrichtung mit einem Strahlengang wie in den Figuren 10, 11, 12, 15, 18, 19 zur Beleuchtung verwendet wird und wobei die in den Figuren 18 und 19 dargestellte Blende BLV nun während der Kameraaufnahme wirksam war, ist das Bild noch immer homogen. Gegenüber dem Bild, welches ohne erfindungsgemäße Mittel zur Kontrastverstärkung aufgenommen wurde, hat sich der Kontrast aber extrem verbessert.

Erreicht wurde dies durch das folgende Einstellverfahren:
Die Blende BLH aus den Figuren 18, 19 wird so positioniert, dass der Prismenfilm PR vorzugsweise ohne Beschnitt durchstrahlt wird. Anschließend wird die Z-Koordinate ZBH so variiert, dass der Kontrast einen Maximalwert annimmt.

Danach wird die Blendenkante BV mit konstanter Z-Koordinate ZBV = ZDmin aus der negativen Y-Richtung so in den Strahlengang gebracht, bis eine farbige Vignettierung am Bildrand sichtbar wird. Anschließend wird die Z-Koordinate ZBH erneut so variiert, dass der Kontrast einen Maximalwert annimmt und die Blende BV mit konstanter Z-Koordinate ZBV = ZDmin so weit wieder aus dem Strahlengang gefahren, bis die Vignettierung im Bild nicht mehr sichtbar ist.

Mit der vorliegenden Erfindung wird ein Verfahren zur Durchlichtbeleuchtung bereitgestellt, das besonders zur Ausleuchtung von kontrastarmen Durchlichtobjekten an Stereomikroskopen und Makroskopen geeignet ist. Außerdem werden Anwendungen dieses Verfahrens in Durchlichteinrichtungen beschrieben.

Durch die Erfindung wird ein kostengünstiges Durchlicht-Hellfeld-Beleuchtungsverfahren bereitgestellt, das besonders zur Ausleuchtung von kontrastarmen Durchlichtobjekten in den kleineren Übersichtsvergrößerungen an Stereomikroskopen und Makroskopen geeignet ist. Das Verfahren liefert eine sehr homogene Ausleuchtung, schränkt das Auflösungsvermögen nicht wesentlich ein und stellt ausreichende Beleuchtungsintensitäten zur Verfügung. Es ist außerdem auch bei geringerer Bauhöhe der Durchlichteinrichtung ohne sichtbare Störungen einsetzbar und eignet sich vorzugsweise für Objektive, deren ideale Z-Blendenlagen in einem größeren Abstand von der Objektauflage entfernt und/oder gegebenenfalls darüber liegen. Das erfindungsgemäße Beleuchtungsverfahren ist darüber hinaus mit anderen Beleuchtungsverfahren, die für zugängliche ideale Z-Blendenlagen geeignet sind, kombinierbar, so dass alle Beleuchtungsverfahren in einer einzigen Durchlichteinrichtung anwendbar sind. Schließlich sind die günstigsten Beleuchtungseinstellungen auch für ungeübte Benutzer leicht einstell- und reproduzierbar. Das Verfahren eignet sich außerdem auch für kostengünstige Objektiv-Zoomkörper-Kombinationen, die keine auskorrigierten und über den Zoombereich feststehenden Pupillenebenen besitzen und nicht zwingend für polarisationsoptische Verfahren nutzbar sein müssen.

### Bezugszeichenliste

- AD3: Abstand zwischen der Führungsbahn FS und der Drehachse D3
- AD5: Abstand zwischen der Führungsbahn FS und der Drehachse D5
- ADH: Abstand zwischen der Führungsbahn FS und der Drehachse DAH
- ADV: Abstand zwischen der Führungsbahn FS und der Drehachse DAV
- AHH: Hebellänge zwischen den Drehachsen DAH und D6
- AHV: Hebellänge zwischen den Drehachsen DAV und D4
- α: Einstellwinkel des Umlenkspiegels SP
- ASPH: Asphärische Beleuchtungsoptik
- β: aktuell wirksamer Zoomfaktor des Zoomkörpers
- β1: Stützstelle Nr. 1 zwischen βmin und βmax zur Beschreibung der Zoomfaktor-Kurven über Näherungsfunktionen
- β2: Stützstelle Nr. 2 zwischen βmin und βmax zur Beschreibung der Zoomfaktor-Kurven über Näherungsfunktionen
- β3: Stützstelle Nr. 3 zwischen βmin und βmax zur Beschreibung der Zoomfaktor-Kurven über Näherungsfunktionen
- β4: Stützstelle Nr. 4 zwischen βmin und βmax zur Beschreibung der Zoomfaktor-Kurven über Näherungsfunktionen
- β5: Stützstelle Nr. 5 zwischen βmin und βmax zur Beschreibung der Zoomfaktor-Kurven über Näherungsfunktionen
- β6: Stützstelle Nr. 6 zwischen βmin und βmax zur Beschreibung der Zoomfaktor-Kurven über Näherungsfunktionen
- β7: Stützstelle Nr. 7 zwischen βmin und βmax zur Beschreibung der Zoomfaktor-Kurven über Näherungsfunktionen
- β8: Stützstelle Nr. 8 zwischen βmin und βmax zur Beschreibung der Zoomfaktor-Kurven über Näherungsfunktionen
- β9: Stützstelle Nr. 9 zwischen βmin und βmax zur Beschreibung der Zoomfaktor-Kurven über Näherungsfunktionen
- β10: Stützstelle Nr. 10 zwischen βmin und βmax zur Beschreibung der Zoomfaktor-Kurven über Näherungsfunktionen
- β11: Stützstelle Nr. 11 zwischen βmin und βmax zur Beschreibung der Zoomfaktor-Kurven über Näherungsfunktionen
- β12: Stützstelle Nr. 12 zwischen βmin und βmax zur Beschreibung der Zoomfaktor-Kurven über Näherungsfunktionen
- β13: Stützstelle Nr. 13 zwischen βmin und βmax zur Beschreibung der Zoomfaktor-Kurven über Näherungsfunktionen
- βmax: maximal einstellbarer Zoomfaktor
- βmin: minimal einstellbarer Zoomfaktor
- βP2: Zoomfaktor, an der die Kurve für das Objektiv Nr. 2 eine Polstelle hat
- B1: Beleuchtungslicht-Grenzstrahl 1
- B2: Beleuchtungslicht-Grenzstrahl 2
- B3: Beleuchtungslicht-Grenzstrahl 3
- B4: Beleuchtungslicht-Grenzstrahl 4
- B5: Beleuchtungslicht-Grenzstrahl 5
- B6: Beleuchtungslicht-Grenzstrahl 6
- BA1: Beleuchtungslicht-Grenzstrahl 1 nach dem Durchgang durch den Prismenfilm PR
- BA2: Beleuchtungslicht-Grenzstrahl 2 nach dem Durchgang durch den Prismenfilm PR
- BA3: Beleuchtungslicht-Grenzstrahl 3 nach dem Durchgang durch den Prismenfilm PR
- BA4: Beleuchtungslicht-Grenzstrahl 4 nach dem Durchgang durch den Prismenfilm PR
- BA5: Beleuchtungslicht-Grenzstrahl 5 nach dem Durchgang durch den Prismenfilm PR
- BA6: Beleuchtungslicht-Grenzstrahl 6 nach dem Durchgang durch den Prismenfilm PR
- BE: Bedieneinheit für das Gesamtsystem
- BH: Blendenkante hinten
- BK: Blendenkante
- BKL: Blendenkante links
- BKR: Blendenkante rechts
- BL: Blende
- BLH: Hintere Blende
- BLL: Blende links
- BLQH: Hintere Blende
- BLQV: Vordere Blende
- BLR: Blende rechts
- BLV: Vordere Blende
- BLYP: Begrenzungskante Leuchtfläche in positiver Y-Richtung
- BMAB: Bedienelement für motorisierte Aperturblende MAB
- BMFT: Bedieneinheit für die motorisierte Fokussiereinrichtung
- BMPR: Strukturbreite der Mikroprismen des Prismenfilms PR
- BMZK: Bedieneinheit für den motorisierten Zoomkörper
- BV: Blendenkante vorne
- BWI: Winkel zwischen den Randstrahlen STL und STR der Beleuchtung
- COW: Codierter Objektivwechsler
- δ: Ablenkungswinkel durch den geneigten Prismenfilm PR
- D3: Drehachse für Hebel HEV an Schlitten SL3
- D4: Drehachse für Hebel HEV an Blende BLV
- D5: Drehachse für Hebel HEH an Schlitten SL5
- D6: Drehachse für Hebel HEH an Blende BLH
- DA: Drehachse
- DAPR: Drehachse des Prismenfilms PR
- DAH: Drehachse hintere Blende
- DAV: Drehachse vordere Blende
- DG: Dicke der transparenten Objektauflage TOA bzw. der Glasplatte
- dI: Übergangs-Lichtintensitätsdifferenz zur Kennzeichnung des Gefälles
- DL: Durchlichteinrichtung
- dW: Übergangs-Winkelbereich zur Kennzeichnung des Gefälles
- ε: Prismenwinkel der Mikroprismen des Prismenfilms PR
- E: Ebene in Höhe der Objektauflage auf der Durchlichteinrichtung; diese Ebene wird i.d.R. durch die Oberseite der Durchlichteinrichtung gebildet
- EM: Elektronikmodul zur Steuerung des Gesamtsystems (Signalverarbeitung etc.)
- f2(1): Ideale Blendenposition in Z-Richtung für das Objektiv OBJ2 am motorisierten Zoomkörper MZK an der Stützstelle Nr. 1, d.h. bei β1
- f2(2): Ideale Blendenposition in Z-Richtung für das Objektiv OBJ2 am motorisierten Zoomkörper MZK an der Stützstelle Nr. 2, d.h. bei β2
- f2(3): Ideale Blendenposition in Z-Richtung für das Objektiv OBJ2 am motorisierten Zoomkörper MZK an der Stützstelle Nr. 3, d.h. bei β3
- f2(4): Ideale Blendenposition in Z-Richtung für das Objektiv OBJ2 am motorisierten Zoomkörper MZK an der Stützstelle Nr. 4, d.h. bei β4
- f2(5): Ideale Blendenposition in Z-Richtung für das Objektiv OBJ2 am motorisierten Zoomkörper MZK an der Stützstelle Nr. 5, d.h. bei β5
- f2(6): Ideale Blendenposition in Z-Richtung für das Objektiv OBJ2 am motorisierten Zoomkörper MZK an der Stützstelle Nr. 6, d.h. bei β6
- f2(7): Ideale Blendenposition in Z-Richtung für das Objektiv OBJ2 am motorisierten Zoomkörper MZK an der Stützstelle Nr. 7, d.h. bei β7
- f2(8): Ideale Blendenposition in Z-Richtung für das Objektiv OBJ2 am motorisierten Zoomkörper MZK an der Stützstelle Nr. 8, d.h. bei β8
- f2(9): Ideale Blendenposition in Z-Richtung für das Objektiv OBJ2 am motorisierten Zoomkörper MZK an der Stützstelle Nr. 9, d.h. bei β9
- f2(10): Ideale Blendenposition in Z-Richtung für das Objektiv OBJ2 am motorisierten Zoomkörper MZK an der Stützstelle Nr. 10, d.h. bei β10
- f2(11): Ideale Blendenposition in Z-Richtung für das Objektiv OBJ2 am motorisierten Zoomkörper MZK an der Stützstelle Nr. 11, d.h. bei β11
- f2(12): Ideale Blendenposition in Z-Richtung für das Objektiv OBJ2 am motorisierten Zoomkörper MZK an der Stützstelle Nr. 12, d.h. bei β12
- f2(13): Ideale Blendenposition in Z-Richtung für das Objektiv OBJ2 am motorisierten Zoomkörper MZK an der Stützstelle Nr. 13, d.h. bei β13
- FE: Führungselemente
- FF: Frontfläche des Lichtleiters LL
- FS: Führungsbahn einer Linearführung, z.B. über eine Führungsstange
- G: Gehäuse
- GN: Grundniveau der Beleuchtung über den Prismenfilm PR
- H1: Hinterer Lichtstrahl 1
- H1': Hinterer Lichtstrahl 1 mit Strahlversatz durch transparente Objektauflage TOA bzw. Glasplatte
- H2: Hinterer Lichtstrahl 2
- H2': Hinterer Lichtstrahl 2 mit Strahlversatz durch transparente Objektauflage TOA bzw. Glasplatte
- HB1: Höhenabstand von der Leuchtfläche LFL zur Blende BL in der idealen Z-Blendenlage für Das Objektiv OBJ1 am Zoomkörper MZK mit dem aktuellen Zoomfaktor b
- HBH: Höhenabstand von der Leuchtfläche LFL zur hinteren Blende BLQH in der idealen Z-Blendenlage für das aktuelle Objektiv OBJ am Zoomkörper MZK mit dem aktuellen Zoomfaktor b
- HBH1: Höhenabstand von der Leuchtfläche LFL zur hinteren Blende BLQH in der idealen Z-Blendenlage für das Objektiv OBJ1 am Zoomkörper MZK mit dem aktuellen Zoomfaktor b
- HBHw3: Höhenabstand von der Leuchtfläche LFL zur hinteren Blende BLQH in waagerechter Position
- HBV: Höhenabstand von der Leuchtfläche LFL zur vorderen Blende BLQV in der idealen Z-Blendenlage für das aktuelle Objektiv OBJ am Zoomkörper MZK mit dem aktuellen Zoomfaktor b
- HEH: Hebel hinten
- HER: Ergonomisch vertretbare Bauhöhe der Durchlichteinrichtung DL
- HEV: Hebel vorne
- HF: Hauptflanke des Mikroprismas PRM
- HIB: Hintere Begrenzung der Lichtintensitätserhöhung
- HL: Abstand von der Leuchtfläche LFL zur Objektebene OE bzw. zur Oberseite der transparenten Objektauflage TOA
- HM: Hinterer Mittenlichtstrahl
- HM': Hinterer Mittenlichtstrahl mit Strahlversatz durch transparente Objektauflage TOA bzw. Glasplatte
- HPR: Abstand von der Leuchtfläche LFL zum Prismenfilm PR bzw. zur Drehachse DAPR
- HV: Höhenabstand der vorderen Blende von der Leuchtfläche gemäß Ausführungsbeispiel
- hVB: Verschieberichtung zur Anpassung der Blendenkante an die ideale Z-Blendenlage
- ϕ: Neigungswinkel des Prismenfilms PR gegenüber der Objektebene OE und ggf. Neigung der Blende, in der der Prismenfilm PR angebracht ist oder angebracht werden könnte
- K: Kamera zur Dokumentation
- Kh1: Kurve, die die ideale Blendenlage für OBJ1 an MZK abhängig von β darstellt
- Kh2o: oberer Kurvenabschnitt, der die ideale Blendenlage für OBJ2 an MZK abhängig von β darstellt (zwischen βmin und βP2)
- Kh2omin: Kleinster Wert des oberen Kurvenabschnitts Kh2o
- Kh2u: unterer Kurvenabschnitt, der die ideale Blendenlage für OBJ2 an MZK abhängig von β darstellt (zwischen βP2 und βmax)
- Kh2umax: Größter Wert des unteren Kurvenabschnitts Kh2u
- Kh3: Kurve, die die ideale Blendenlage für OBJ3 an MZK abhängig von β darstellt
- KLD: Kaltlichtquelle zur Lichtversorgung der Durchlichteinrichtung DL
- L: Linker Abbildungskanal
- L1: Linker Lichtstrahl 1
- L1': Linker Lichtstrahl 1 mit Strahlversatz durch transparente Objektauflage TOA bzw. Glasplatte
- L2: Linker Lichtstrahl 2
- L2': Linker Lichtstrahl 2 mit Strahlversatz durch transparente Objektauflage TOA bzw. Glasplatte
- L3: Linker Lichtstrahl 3
- L3': Linker Lichtstrahl 3 mit Strahlversatz durch transparente Objektauflage TOA bzw. Glasplatte
- L4: Linker Lichtstrahl 4
- L4': Linker Lichtstrahl 4 mit Strahlversatz durch transparente Objektauflage TOA bzw. Glasplatte
- L5: Linker Lichtstrahl 5
- L5': Linker Lichtstrahl 5 mit Strahlversatz durch transparente Objektauflage TOA bzw. Glasplatte
- L6: Linker Lichtstrahl 6
- L6': Linker Lichtstrahl 6 mit Strahlversatz durch transparente Objektauflage TOA bzw. Glasplatte
- LB: Wirksame Länge der Blende BL
- LBH: Abstand zwischen der hinteren Blendenkante BH und dem Drehpunkt DAH der hinteren Blende BLH
- LBV: Abstand zwischen der vorderen Blendenkante BV und dem Drehpunkt DAV der vorderen Blende BLV
- LFL: Leuchtfläche der Lichtquelle LQ
- LFLX: Ausdehnung der Leuchtfläche LFL in X-Richtung
- LFLY: Ausdehnung der Leuchtfläche LFL in Y-Richtung
- LHH: Länge des hinteren Hebels HEH zwischen den Drehachsen D5 und D6
- LHV: Länge des vorderen Hebels HEV zwischen den Drehachsen D3 und D4
- LL: Lichtleiter
- LLYN: Ausdehnung der Leuchtfläche LFL in negativer Y-Richtung
- LLYP: Ausdehnung der Leuchtfläche LFL in positiver Y-Richtung
- LM: Linker Mittenlichtstrahl
- LM': Linker Mittenlichtstrahl mit Strahlversatz durch transparente Objektauflage TOA bzw. Glasplatte
- LO: Oberste Kante des Lamellenfilms
- LQ: Lichtquelle
- LV: Lichtverstärkung durch den Prismenfilm PR
- LX: Leuchtflächenausdehnung in der X-Richtung für Berücksichtigung der Objektivrandstrahlen
- LY: Leuchtflächenausdehnung in der Y-Richtung für Berücksichtigung der Objektivrandstrahlen
- LYN: wirksame Ausdehnung der Lichtquelle in negativer Y-Richtung
- M1: Mittlerer Lichtstrahl 1
- M1': Mittlerer Lichtstrahl 1 mit Strahlversatz durch transparente Objektauflage TOA bzw. Glasplatte
- M2: Mittlerer Lichtstrahl 2
- M2': Mittlerer Lichtstrahl 2 mit Strahlversatz durch transparente Objektauflage TOA bzw. Glasplatte
- MFT: Motorisierte Fokussiereinrichtung
- MLQ: Helligkeitsmaximum mit Lichtquelle LQ, d.h. ohne Prismenfilm PR
- MPR: Helligkeitsmaximum mit Prismenfilm PR
- MZK: Motorisierter Zoomkörper
- nG: Brechzahl der transparenten Objektauflage TOA
- nO: Brechzahl des Objektes OB
- NA1: Numerische Apertur von Objektiv Nr. 1
- NA2: Numerische Apertur von Objektiv Nr. 2
- NF: Nebenflanke des Mikroprismas PRM
- OA: Optische Achse des Objektivs
- OB: Objekt
- OBJ: Objektiv
- OBJ1: Objektiv Nr. 1
- OBJ2: Objektiv Nr. 2 mit weit von OE entfernter EP
- OBJ3: Objektiv Nr. 3
- OE: Objektebene (ohne Objekt identisch mit der Objektauflage)
- OF, OF1, OF2: Durchmesser des auszuleuchtenden Objektfeldes
- OH: Höhe des Objektes OB incl. des Umgebungsmediums (z.B. Petrischale mit Nährlösung) von der Objektauflage, bzw. von der Oberseite der transparenten Objektauflage TOA, bis zur Objektebene OE
- OK: Okular
- PB: Plateaubreite der Lichtintensität des umverteilten Beleuchtungslichtes um die Haupt- Ausbreitungsrichtung STA zwischen PMI und PRA
- PMI: Rand der Plateaubreite PB, der den kleineren Abstand zur ursprünglichen Haupt- Ausbreitungsrichtung STE aufweist; PB ist durch den Abfall bzw. Anstieg der Lichtintensität auf den Wert MLQ definiert
- PR: Prismenfilm
- PRA: Rand der Plateaubreite PB, der den größeren Abstand zur ursprünglichen Haupt- Ausbreitungsrichtung STE aufweist; PB ist durch den Abfall bzw. Anstieg der Lichtintensität auf den Wert MLQ definiert
- PRM: Mikroprisma
- PRS: Mikroprismenstruktur
- PRYL: Wirksame Länge des Prismenfilms PR
- PRYP: Wirksame Länge des Prismenfilms PR in positiver Y-Richtung
- PRYN: Wirksame Länge des Prismenfilms PR in negativer Y-Richtung
- R: Rechter Abbildungskanal
- R1: Rechter Lichtstrahl 1
- R1': Rechter Lichtstrahl 1 mit Strahlversatz durch transparente Objektauflage TOA bzw. Glasplatte
- R2: Rechter Lichtstrahl 2
- R2': Rechter Lichtstrahl 2 mit Strahlversatz durch transparente Objektauflage TOA bzw. Glasplatte
- R3: Rechter Lichtstrahl 3
- R3': Rechter Lichtstrahl 3 mit Strahlversatz durch transparente Objektauflage TOA bzw. Glasplatte
- R4: Rechter Lichtstrahl 4
- R4': Rechter Lichtstrahl 4 mit Strahlversatz durch transparente Objektauflage TOA bzw. Glasplatte
- R5: Rechter Lichtstrahl 5
- R5': Rechter Lichtstrahl 5 mit Strahlversatz durch transparente Objektauflage TOA bzw. Glasplatte
- R6: Rechter Lichtstrahl 6
- R6': Rechter Lichtstrahl 6 mit Strahlversatz durch transparente Objektauflage TOA bzw. Glasplatte
- RM: Rechter Mittenlichtstrahl
- RM': Rechter Mittenlichtstrahl mit Strahlversatz durch transparente Objekt-auflage TOA bzw. Glasplatte
- S3: Positions-Sensor für den Schlitten 3
- S3 (off): Nicht aktivierter Positions-Sensor S3 für den Schlitten 3
- S3 (on): Aktivierter Positions-Sensor S3 für den Schlitten 3
- S4: Positions-Sensor für den Schlitten 4
- S4 (off): Nicht aktivierter Positions-Sensor S4 für den Schlitten 4
- S4 (on): Aktivierter Positions-Sensor S4 für den Schlitten 4
- S5: Positions-Sensor für den Schlitten 5
- S5 (off): Nicht aktivierter Positions-Sensor S5 für den Schlitten 5
- S5 (on): Aktivierter Positions-Sensor für den Schlitten 5
- S5H: Positions-Hilfssensor für den Schlitten 5
- S5H (off): Nicht aktivierter Positions-Hilfssensor S5H für den Schlitten 5
- S5H (on): Aktivierter Positions-Hilfssensor S5H für den Schlitten 5
- S6: Positions-Sensor für den Schlitten 6
- S6 (off): Nicht aktivierter Positions-Sensor S6 für den Schlitten 6
- S6 (on): Aktivierter Positions-Sensor S6 für den Schlitten 6
- S6H: Positions-Hilfssensor für den Schlitten 6
- S6H (off): Nicht aktivierter Positions-Hilfssensor S6H für den Schlitten 6
- S6H (on): Aktivierter Positions-Hilfssensor S6H für den Schlitten 6
- SADJ: Adjust-Scrollrad
- SF3: Schaltfahne 3 zur Aktivierung von Positions-Sensor S3
- SF4: Schaltfahne 4 zur Aktivierung von Positions-Sensor S4
- SF5: Schaltfahne 5 zur Aktivierung von Positions-Sensor S5 und ggf. Positions-Hilfssensor S5H
- SF6: Schaltfahne 6 zur Aktivierung von Positions-Sensor S6 und ggf. Positions-Hilfssensor S6H
- SL3: Schlitten 3
- SL4: Schlitten 4
- SL5: Schlitten 5
- SL6: Schlitten 6
- SP: Umlenkspiegel
- SR1: Bedienelement 1 in der Durchlichteinrichtung DL
- SR2: Bedienelement 2 in der Durchlichteinrichtung DL
- SR3: Bedienelement 3 in der Durchlichteinrichtung DL
- ST1: Lichtstrahl 1
- ST2: Lichtstrahl 2
- ST3: Lichtstrahl 3
- ST4: Lichtstrahl 4
- ST5: Lichtstrahl 5
- STA: Austretender Lichtstrahl
- STE: Eintretender Lichtstrahl
- SV: Strahlversatz
- t: Dicke des Prismenfilms PR
- T: Tubus
- TE: Teilung der Mikroprismenstruktur PRS
- TM: Trägermaterial für Mikroprismen des Prismenfilms PR
- TOA: Transparente Objektauflage
- TR: Träger
- V1: Vorderer Lichtstrahl 1
- V1': Vorderer Lichtstrahl 1 mit Strahlversatz durch transparente Objektauflage TOA bzw. Glasplatte
- V2: Vorderer Lichtstrahl 2
- V2': Vorderer Lichtstrahl 2 mit Strahlversatz durch transparente Objektauflage TOA bzw. Glasplatte
- VB: Verschieberichtung der Blende BL
- VBH: Verschieberichtung der hinteren Blende zur Variation des Kontrastes
- VBHH: Verschieberichtung der Hebelverstellung für die hintere Blende
- VBL: Verschieberichtung der linken Blende
- VBLH: Verschieberichtung der hinteren Blende parallel zur Leuchtfläche LFL
- VBLV: Verschieberichtung der vorderen Blende parallel zur Leuchtfläche LFL
- VBR: Verschieberichtung der rechten Blende
- VBV: Verschieberichtung der vorderen Blende
- VBVH: Verschieberichtung der Hebelverstellung für die vordere Blende
- VBYH: Verschiebung Begrenzungskante der hinteren Blende
- VBYV: Verschiebung Begrenzungskante der vorderen Blende
- VHL: Verschieberichtung der Lichtquelle LQ parallel zur Leuchtfläche LFL
- VM: Vorderer Mittenlichtstrahl
- VM': Vorderer Mittenlichtstrahl mit Strahlversatz durch transparente Objektauflage TOA bzw. Glasplatte
- VOB: Vordere Begrenzung der Lichtintensitätserhöhung
- VPR: Verschieberichtung des Prismenfilms PR
- VR: Verschieberichtung
- VSH: Versatz zwischen der Ebene, die durch die Drehpunktachsen DAH, D6 aufgespannt wird und der hinteren Blendenkante BH
- VSV: Versatz zwischen der Ebene, die durch die Drehpunktachsen DAV, D4 aufgespannt wird und der vorderen Blendenkante BV
- VVH: Verschieberichtung der hinteren Blende senkrecht zur Leuchtfläche LFL
- VVL: Verschieberichtung der Lichtquelle LQ senkrecht zur Leuchtfläche LFL
- VVV: Verschieberichtung der vorderen Blende senkrecht zur Leuchtfläche LFL
- VYH: Verschiebung Begrenzungskante der hinteren Blende gemäß Ausführungsbeispiel
- VYV: Verschiebung Begrenzungskante der vorderen Blende gemäß Ausführungsbeispiel
- ω: Neigungswinkel der vorderen Blende BLV gegenüber der Objektebene OE
- WB: Wirksame Blendenbreite
- X: X-Koordinatenachse des XYZ-Koordinatensystems
- Y: Y-Koordinatenachse des XYZ-Koordinatensystems
- YH: Y-Koordinate der hinteren Drehachse DAH
- YBH: Y-Koordinate der hinteren Blendenkante BH
- YBV: Y-Koordinate der vorderen Blendenkante BV
- YLH: Y-Koordinate der hinteren Leuchtflächenbegrenzung
- YLV: Y-Koordinate der vorderen Leuchtflächenbegrenzung
- YMH: motorisch eingestellte Y-Koordinate der hinteren Blendenkante
- YMV: motorisch eingestellte Y-Koordinate der vorderen Blendenkante
- YV: Y-Koordinate der vorderen Drehachse DAV
- Z: Z-Koordinatenachse des XYZ-Koordinatensystems
- ZAP: Optional einlegbares Zubehör in Adapterplatte AP bzw. die Schnittstelle hierfür (z.B. Polarisationsfilter, Einlegeblenden, Farbfilter, etc.)
- ZBH: Z-Koordinate der hinteren Blendenkante BH
- ZBV: Z-Koordinate der vorderen Blendenkante BV
- ZDmax: Z-Koordinate der obersten Blendenposition, die konstruktiv realisierbar ist
- ZDmin: Z-Koordinate der untersten Blendenposition ohne Tisch, die konstruktiv realisierbar ist
- ZEP1: Z-Koordinate der Eintrittspupille für das Objektiv Nr. 1 in der aktuellen Zoomvergrößerung
- ZEP2: Z-Koordinate der Eintrittspupille für das Objektiv Nr. 2 in der aktuellen Zoomvergrößerung
- ZEP3: Z-Koordinate der Eintrittspupille für das Objektiv Nr. 3 in der aktuellen Zoomvergrößerung
- ZF: Z-Koordinate der Führungsbahn-Bezugsachse
- Zh: Z-Koordinate der Blendenkante BK in der idealen Z-Blendenposition für das aktuelle Objektiv in der aktuellen Zoomvergrößerung
- Zh1: Z-Koordinate der Blendenkante BK in der idealen Z-Blendenposition für das Objektiv Nr. 1 in der aktuellen Zoomvergrößerung
- Zh1 max: maximaler Wert von Zh für das Objektiv Nr. 1
- Zh1min: minimaler Wert von Zh für das Objektiv Nr. 1
- Zh2: Z-Koordinate der Blendenkante BK in der idealen Z-Blendenposition für das Objektiv Nr. 2 in der aktuellen Zoomvergrößerung
- Zh2max: maximaler Wert von Zh für das Objektiv Nr. 2
- Zh2min: minimaler Wert von Zh für das Objektiv Nr. 2
- Zh3: Z-Koordinate der Blendenkante BK in der idealen Z-Blendenposition für das Objektiv Nr. 3 in der aktuellen Zoomvergrößerung
- Zh3max: maximaler Wert von Zh für das Objektiv Nr. 3
- Zh3min: minimaler Wert von Zh für das Objektiv Nr. 3
- ZH: Z-Koordinate der hinteren Drehachse DAH
- ZHL: Z-Koordinate der Leuchtfläche LFL
- ZMH: motorisch eingestellte Z-Koordinate der hinteren Blendenkante
- ZMV: motorisch eingestellte Z-Koordinate der vorderen Blendenkante
- ZV: Z-Koordinate der vorderen Drehachse DAV

## Patentansprüche

1. Vorrichtung zur Durchlichtbeleuchtung für Lichtmikroskope, insbesondere Stereomikroskope oder Makroskope,
mit einer Lichtquelle (LQ) zum Aussenden eines Beleuchtungslichtbündels und
mit einer Halteeinrichtung (TOA) zum Halten einer zu untersuchenden Probe (OB),
wobei zum Einstellen des Kontrasts zwischen der Lichtquelle (LQ) und der Halteeinrichtung (TOA) eine Ablenkeinrichtung vorhanden ist, mit welcher eine Winkelverteilung des Beleuchtungslichtbündels relativ zu einer optischen Achse (OA) variierbar ist, und wobei
die Ablenkeinrichtung eine Prismenfolie (PR) aufweist,
**dadurch gekennzeichnet,**
**dass** die Prismen der Prismenfolie (PR) in Richtung der Lichtquelle (LQ) weisen.

2. Vorrichtung nach Anspruch 1,
**dadurch gekennzeichnet,**
**dass** eine Hauptablenkrichtung (STA) der Ablenkeinrichtung von der optischen Achse (OA) verschieden ist.

3. Vorrichtung nach einem der Ansprüche 1 oder 2,
**dadurch gekennzeichnet, dass** die Ablenkeinrichtung um eine quer zur optischen Achse (OA) orientierte Drehachse drehbar ist, wobei die Drehachse parallel zur Richtung der Prismenkanten orientiert ist.

4. Vorrichtung nach einem der Ansprüche 1 bis 3,
**dadurch gekennzeichnet,**
**dass** Mittel zum variablen Positionieren der Ablenkeinrichtung (PR) in einer Richtung quer zur optischen Achse (OA) und/oder in Richtung der optischen Achse (OA) vorhanden sind.

5. Vorrichtung nach einem der Ansprüche 1 bis 4,
**dadurch gekennzeichnet,**
**dass** Mittel zum Herausbewegen der Ablenkeinrichtung aus einem Strahlengang des Beleuchtungfichts und Hereinbewegen der Ablenkeinrichtung in den Strahlengang des Beleuchtungslichts vorhanden sind.

6. Vorrichtung nach einem der Ansprüche 1 bis 5,
**dadurch gekennzeichnet,**
**dass** die Prismen (PRM) des Prismenfilms (PR) einen Prismenwinkel (ε) von 20° bis 30°, bevorzugt von 24° bis 28° und besonders bevorzugt von 26°, aufweisen.

7. Vorrichtung nach einem der Ansprüche 1 bis 6,
**dadurch gekennzeichnet,**
**dass** mindestens einer Blendenkante (BK) zum Beschneiden des Beleuchtungslichtbündels vorhanden ist,
**dass** die Blendenkante (BK) zwischen der Halteeinrichtung (TOA) und der Lichtquelle (LQ) angeordnet ist,
**dass** die Blendenkante (BK) sich quer zu einer optischen Achse (OA), insbesondere eines Objektivs (OBJ1, OJ2, OBJ3), eines Lichtmikroskops erstreckt, welches in einem Betriebszustand an der Vorrichtung zur Durchlichtbeleuchtung positionierbar ist,
**dass** zum Anpassen des Strahlengangs des Beleuchtungslichts an eine wirksame Eintrittspupille des Objektivs (OBJ1, OBJ2, OBJ3) Mittel zum variablen Positionieren der Blendenkante (BK) in Richtung (Z) der optischen Achse (OA) vorhanden sind und
**dass** eine Position der Blendenkante (BK) in Richtung (Z) der optischen Achse (OA), insbesondere unabhängig von einer Position der Blendenkante (BK) quer zur optischen Achse (OA), variierbar ist.

8. Vorrichtung nach Anspruch 7,
**dadurch gekennzeichnet,**
**dass** die Blendenkante (BK) eine Kante (BH) einer mechanischen Blende ist und dass die Ablenkeinrichtung (PR) an der mechanischen Blende gebildet ist.

9. Vorrichtung nach einem der Ansprüche 1 bis 8,
**dadurch gekennzeichnet,**
**dass** zum Variieren einer wirksamen Leuchtfläche (LFL) der Lichtquelle (LQ) mindestens eine weitere Blende vorhanden ist, die unmittelbar vor der Lichtquelle (LQ) positioniert ist.

10. Vorrichtung nach einem der Ansprüche 1 bis 9,
**dadurch gekennzeichnet,**
**dass** zum Verschieben der Blendenkante (BK) und/oder der Ablenkeinrichtung in Richtung der optischen Achse (OA) und in Richtung quer zur optischen Achse (OA) eine Schlittenmechanik mit einem ersten Schlitten (SL6) und einem zweiten Schlitten (SL5) vorhanden ist.

11. Vorrichtung nach einem der Ansprüche 8 bis 10,
**dadurch gekennzeichnet,**
**dass** die Blendenkante (BK, BH, BV) das Beleuchtungslichtbündel asymmetrisch beschneidet.

12. Vorrichtung nach eirem der Ansprüche 1 bis 11,
**dadurch gekennzeichnet,**
**dass** die Lichtquelle (LQ) eine flächige Lichtquelle, insbesondere eine Mehrzahl von Leuchtdioden, besonders bevorzugt eine Weißlicht-LED, ist.

13. Verfahren zur Durchlichtbeleuchtung für Lichtmikroskope,
bei dem eine von einer Halteeinrichtung (TOA) gehaltene Probe (OB) mit Beleuchtungslicht von einer Lichtquelle (LQ) beaufschlagt wird, und
bei dem eine Winkelverteilung eines Beleuchtungslichtbündels zum Einstel-Ien des Kontrasts mit einer Ablenkeinrichtung variiert wird, und wobei die Ablenkeinrichtung eine Prismenfolie (PR) aufweist,
**dadurch gekennzeichnet,**
**dass** die Prismen der Prismenfolie (PR) in Richtung der Lichtquelle (LQ) weisen.

14. Verfahren nach Anspruch 13,
**dadurch gekennzeichnet,**
**dass** ein Neigungswinkel (ϕ) der Ablenkeinrichtung an eine jeweils eingestellte Kombination aus Objektiv (OB), Zoomkörper (MZK) und Zoomfaktor (β) angepasst wird.

15. Verfahren nach einem der Ansprüche 13 oder 14,
**dadurch gekennzeichnet,**
**dass** die Ablenkeinrichtung im Betrieb so geneigt ist, dass das Beleuchtungsflihtbündel von einem Benutzer weg verkippt wird.

16. Verfahren nach einem der Ansprüche 13 bis 15,
**dadurch gekennzeichnet,**
**dass** ein von der Lichtquelle (LQ) ausgehendes Beleuchtungslichtbündel von einer zwischen der Halteeinrichtung (TOA) und der Lichtquelle (LQ) angeordneten Blendenkante (BK) beschnitten wird, wobei ein Strahlengang des Beleuchtungslichts zwischen der Blendenkante (BK) und der von der Halteeinrichtung (TOA) gehaltenen Probe (OB) insbesondere frei ist von verstellbaren strahlfokussierenden Komponenten.

17. Verfahren nach Anspruch 16,
**dadurch gekennzeichnet,**
**dass** die Blendenkante (BK, BH, BV) zum Einstellen des Kontrasts in einer Richtung (VB) quer zur optischen Achse (OA) positioniert wird.

18. Verfahren nach Anspruch 16 oder 17,
**dadurch gekennzeichnet,**
**dass** die Blendenkante (BK) in einer Ebene der wirksamen Eintrittspupille des Objektivs (OBJ1. OBJ2, OBJ3) positioniert wird.

19. Verfahren nach einem der Ansprüche 16 bis 18,
**dadurch gekennzeichnet,**
**dass** die Blendenkante (BK) aus dem Strahlengang des Beleuchtungslichts herausbewegt und die Ablenkeinrichtung in den Strahlengang des Beleuchtungslichts hineinbewegt wird, wenn eine wirksame Eintrittspupille des Objektivs außerhalb eines für die Blendenkante (BK) zugänglichen Bereichs liegt.

20. Verfahren nach einem der Ansprüche 13 bis 19,
**dadurch gekennzeichnet,**
**dass** Einstellungen der Ablenkeinrichtung, der mindestens einen Blendenkante (BK) und/oder weiterer Blenden, insbesondere nach Benutzereingabe, automatisiert vorgenommen werden.

21. Verfahren nach einem der Ansprüche 13 bis 20,
**dadurch gekennzeichnet,**
**dass** Einstellungen der Ablenkeinrichtung der mindestens einen Blendenkante (BK) und/oder weiterer Blenden und/oder weiterer optischer Komponenten abhängig von einer festgestellten Konfiguration von vorhandenen, insbesondere optischen, Komponenten automatisiert vorgenommen werden.

22. Mikroskopsystem mit einem Lichtmikroskop und einer Vorrichtung zur Durchlichtbeleuchtung nach einem der Ansprüche 1 bis 12.

23. Mikroskopsystem nach Anspruch 22,
**dadurch gekennzeichnet,**
**dass** eine Steuereinrichtung vorhanden ist, die mit Bestandteilen des Lichtmikroskops und der Vorrichtung zur Durchlichtbeleuchtung verbunden ist und zum Ansteuern des Mikroskops und der Vorrichtung zur Durchlichtbeleuchtung zur Durchführung eines Verfahrens nach einem der Ansprüche 14 bis 22 eingerichtet ist.

24. Mikroskopsystem nach Anspruch 22 oder 23,
**dadurch gekennzeichnet,**
**dass** eine Speichereinrichtung vorhanden ist, in welcher Einstellungen der Durchlichteinrichtung und des Lichtmikroskops, insbesondere der mindestens einen Blendenkante (BK), abgespeichert werden.

## Claims

1. A transmitted light illumination apparatus for light microscopes, in particular
stereo microscopes or macroscopes, the apparatus comprising
a light source (LQ) adapted to emit an illuminating light bundle, and
a holding device (TOA) for holding a sample (OB) to be examined,
wherein, for contrast adjustment, a deflection device is provided between the light source (LQ) and the holding device (TOA) wherein an angle distribution of the illuminating light bundle relative to an optical axis (OA) can be varied with the deflection device, and wherein
the deflection device comprises a prism film (PR);
**characterized in that**
the prisms of the prism film (PR) point in the direction of the light source (LQ).

2. Apparatus according to claim 1,
**characterized in that**
a main deflection direction (STA) of the deflection device is different from the optical axis (OA).

3. Apparatus according to claim 1 or 2,
**characterized in that**
the deflection device is rotatable about a rotation axis orientated transversely to the optical axis (OA) and oriented parallel to the direction of the prism edges.

4. Apparatus according to one of the claims 1 to 3,
**characterized in that**
means for variable positioning of the deflection device (PR) in a direction transversely to the optical axis (OA) and / or in the direction of the optical axis (OA) are provided.

5. Apparatus according to one of the claims 1 to 4,
**characterized in that**
means are provided for moving the deflection device out of an optical path of the illuminating light and for moving the deflection device into the optical path of the illuminating light.

6. Apparatus according to one of the claims 1 to 5,
**characterized in that**
the prisms (PRM) of the prism film (PR) have a prism angle (ε) of 20° to 30°, preferably 24° to 28° and particularly preferably 26°.

7. Apparatus according to one of the claims 1 to 6,
**characterized in that**
at least one diaphragm edge (BK) to trim the illuminating light bundle is provided, the diaphragm edge (BK) is arranged between the holding device (TOA) and the light source (LQ),
the diaphragm edge (BK) extends transversely to an optical axis (OA), in particular of an objective (OBJ1, OBJ2, OBJ3), of a light microscope, which can be positioned in an operating state on the transmitted light illumination apparatus, and
in order to adapt the optical path of the illuminating light to an effective entrance pupil of the objective (OBJ1, OBJ2, OBJ3) means for variable positioning of the diaphragm edge (BK) in direction (Z) of the optical axis (OA) are provided, and a position of the diaphragm edge (BK) in the direction (Z) of the optical axis (OA) can be varied, in particular irrespectively of a position of the diaphragm edge (BK) transversely to the optical axis (OA).

8. Apparatus according to claim 7,
**characterized in that**
the diaphragm edge (BK) is an edge (BH) of a mechanical diaphragm and the deflection device (PR) is formed at the mechanical diaphragm.

9. Apparatus according to one of the claims 1 to 8,
**characterized in that**
for varying an effective light surface (LFL) of the light source (LQ) at least one further diaphragm is provided which is positioned directly in front of the light source (LQ).

10. Apparatus according to one of the claims 1 to 9,
**characterized in that**
a carriage mechanism with a first carriage (SL6) and a second carriage (SL5) is provided to displace the diaphragm edge (BK) and/or the deflection device in the direction of the optical axis (OA) and in the direction transversely to the optical axis (OA).

11. Apparatus according to one of the claims 8 to 10,
**characterized in that**
the diaphragm edge (BK, BH, BV) asymmetrically trims the illuminating light bundle.

12. Apparatus according to one of the claims 1 to 11,
**characterized in that**
the light source (LQ) is a planar light source, in particular a plurality of light emitting diodes, particularly preferably a white light LED.

13. Transmitted light illumination method for light microscopes,
in which a sample (OB) held by a holding device (TOA) is exposed to illuminating light from a light source (LQ), and
in which an angle distribution of an illuminating light bundle is varied with a deflection device for contrast adjustment, and wherein
the deflection device comprises a prism film (PR),
**characterized in that**
the prisms of the prism film (PR) point in the direction of the light source (LQ).

14. Method according to claim 13,
**characterized in that**
an inclination angle (ϕ) of the deflection device is adjusted to each set combination of an objective (OB), a zoom body (MZK) and a zoom factor (β).

15. Method according to claim 13 or 14,
**characterized in that**
the deflection device is tilted during operation such that the illumination light bundle is tilted away from a user.

16. Method according to one of the claims 13 to 15,
**characterized in that**
an illuminating light bundle emitted from the light source (LQ) is trimmed by a diaphragm edge (BK) arranged between the holding device (TOA) and the light source (LQ), wherein an optical path of the illuminating light between the diaphragm edge (BK) and the sample (OB) held by the holding device (TOA) is in particular free of adjustable beam-focussing components.

17. Method according to claim 16,
**characterized in that**
the diaphragm edge (BK, BH, BV) is positioned in a direction (VB) transversely to the optical axis (OA) in order to set the contrast.

18. Method according to claim 16 or 17,
**characterized in that**
the diaphragm edge (BK) is positioned in a plane of the effective entrance pupil of the objective (OBJ1, OBJ2, OBJ3).

19. Method according to one of the claims 16 to 18,
**characterized in that**
the diaphragm edge (BK) is moved out of the optical path of the illuminating light and the deflection device is moved into the optical path of the illuminating light if an effective entrance pupil of the objective lies outside an area accessible to the diaphragm edge (BK).

20. Method according to one of the claims 13 to 19,
**characterized in that**
settings of the deflection device, the at least one diaphragm edge (BK) and / or further diaphragms are realised in an automated manner, in particular following a user input.

21. Method according to one of the claims 13 to 20,
**characterized in that**
adjustments of the deflection device of the at least one diaphragm edge (BK) and / or further diaphragms and / or further optical components are carried out in an automated manner in dependence upon a determined configuration of components, in particular optical components, that are present.

22. Microscope system with a light microscope and a transmitted light illumination apparatus according to one of the claims 1 to 12.

23. Microscope system according to claim 22,
**characterized in that**
a control device is provided which is connected to components of the light microscope and the transmitted light illumination apparatus and which is configured to control the microscope and the transmitted light illumination apparatus to carry out a method according to one of the claims 14 to 22.

24. Microscope system according to claim 22 or 23,
**characterized in that**
a memory device is provided, in which settings of the transmitted light device and of the microscope, in particular of the at least one diaphragm edge (BK), are stored.

## Revendications

1. Dispositif d'éclairage par transmission pour microscopes optiques, en particulier des microscopes stéréo ou des macroscopes,
avec une source de lumière (LQ) configurée pour l'émission d'un faisceau lumineux d'éclairage et
avec un dispositif de maintien (TOA) configuré pour maintenir un échantillon (OB) à examiner,
dans lequel, pour régler le contraste entre la source de lumière (LQ) et le dispositif de maintien (TOA), un déflecteur est présent avec lequel il est possible de faire varier une répartition angulaire du faisceau lumineux d'éclairage par rapport à un axe optique (OA), et dans lequel le déflecteur présente un film à prismes (PR),
**caractérisé en ce**
**que** les prismes du film à prismes (PR) sont orientés en direction de la source de lumière (LQ).

2. Dispositif selon la revendication 1,
**caractérisé en ce**
**qu'**une direction de déflexion principale (STA) du déflecteur est différente de l'axe optique (OA).

3. Dispositif selon l'une des revendications 1 ou 2,
**caractérisé en ce**
**que** le déflecteur peut pivoter autour d'un axe de rotation orienté transversalement à l'axe optique (OA), dans lequel l'axe de rotation est orienté parallèlement à la direction des arêtes des prismes.

4. Dispositif selon l'une des revendications 1 à 3,
**caractérisé en ce**
**que** des moyens pour le positionnement variable du déflecteur (PR) dans une direction transversale à l'axe optique (OA) et/ou en direction de l'axe optique (OA) sont présents.

5. Dispositif selon l'une des revendications 1 à 4,
**caractérisé en ce**
**que** des moyens pour l'extraction du déflecteur hors d'une trajectoire de rayons lumineux de la lumière d'éclairage et l'introduction du déflecteur dans la trajectoire de rayons lumineux de la lumière d'éclairage sont présents.

6. Dispositif selon l'une des revendications 1 à 5,
**caractérisé en ce**
**que** les prismes (PRM) du film à prismes (PR) présentent un angle de prisme () de 20° à 30°, de préférence de 24° à 28° et de manière particulièrement préférée de 26°.

7. Dispositif selon l'une des revendications 1 à 6,
**caractérisé en ce**
**qu'**au moins une arête de diaphragme (BK) configurée pour couper le faisceau lumineux d'éclairage est présente,
**que** l'arête de diaphragme (BK) est disposée entre le dispositif de maintien (TOA) et la source de lumière (LQ),
**que** l'arête de diaphragme (BK) s'étend transversalement à un axe optique (OA), en particulier d'un objectif (OBJ1, OJ2, OBJ3), d'un microscope optique, qui, à l'état de fonctionnement, est positionnable au niveau du dispositif d'éclairage par transmission,
**que** des moyens pour le positionnement variable de l'arête de diaphragme (BK) en direction (Z) de l'axe optique (OA) sont présents pour adapter la trajectoire de rayons lumineux de la lumière d'éclairage à une pupille d'entrée effective de l'objectif (OBJ1, OBJ2, OBJ3) et
**qu'**il est possible de faire varier une position de l'arête de diaphragme (BK) en direction (Z) de l'axe optique (OA), en particulier indépendamment d'une position de l'arête de diaphragme (BK) transversalement à l'axe optique (OA).

8. Dispositif selon la revendication 7,
**caractérisé en ce**
**que** l'arête de diaphragme (BK) est une arête (BH) d'un diaphragme mécanique et que le déflecteur (PR) est formé au niveau du diaphragme mécanique.

9. Dispositif selon l'une des revendications 1 à 8,
**caractérisé en ce**
**que**, pour faire varier une surface lumineuse effective (LFL) de la source de lumière (LQ), est présent au moins un autre diaphragme qui est positionné directement devant la source de lumière (LQ).

10. Dispositif selon l'une des revendications 1 à 9,
**caractérisé en ce**
**que**, pour déplacer l'arête de diaphragme (BK) et/ou le déflecteur en direction de l'axe optique (OA) et en direction transversale à l'axe optique (OA) est présent un mécanisme à chariot avec un premier chariot (SL6) et un second chariot (SL5).

11. Dispositif selon l'une des revendications 8 à 10,
**caractérisé en ce**
**que** l'arête de diaphragme (BK, BH, BV) croise de manière asymétrique le faisceau lumineux d'éclairage.

12. Dispositif selon l'une des revendications 1 à 11,
**caractérisé en ce**
**que** la source de lumière (LQ) est une source de lumière étendue, en particulier une pluralité de diodes électroluminescentes, de manière particulièrement préférée une LED à lumière blanche.

13. Procédé d'éclairage par transmission pour microscopes optiques, dans lequel une lumière d'éclairage provenant d'une source de lumière (LQ) est appliquée sur un échantillon (OB) maintenu par un dispositif de maintien (TOA), et
dans lequel un déflecteur adapté pour régler le contraste permet de faire varier une répartition angulaire d'un faisceau lumineux d'éclairage, et dans lequel
le déflecteur présente un film à prismes (PR),
**caractérisé en ce**
**que** les prismes du film à prismes (PR) sont orientés en direction de la source de lumière (LQ).

14. Procédé selon la revendication 13,
**caractérisé en ce**
**qu'**un angle d'inclinaison (ϕ) du déflecteur est adapté à une combinaison respectivement réglée d'objectif (OB), de corps de zoom (MZK) et de facteur de zoom (β).

15. Procédé selon l'une des revendications 13 ou 14,
**caractérisé en ce**
**que**, en fonctionnement, le déflecteur est incliné de telle sorte que le faisceau lumineux d'éclairage est éloigné par basculement par un utilisateur.

16. Procédé selon l'une des revendications 13 à 15,
**caractérisé en ce**
**qu'**un faisceau lumineux d'éclairage émis par la source de lumière (LQ) est coupé par une arête de diaphragme (BK) disposée entre le dispositif de maintien (TOA) et la source de lumière (LQ), dans lequel une trajectoire de rayons lumineux de la lumière d'éclairage entre l'arête de diaphragme (BK) et l'échantillon (OB) maintenu par le dispositif de maintien (TOA) est exempte en particulier de composants de focalisation de rayon lumineux à réglage modifiable.

17. Procédé selon la revendication 16,
**caractérisé en ce**
**que** l'arête de diaphragme (BK, BH, BV) configurée pour le réglage du contraste est positionnée dans une direction (VB) transversale à l'axe optique (OA).

18. Procédé selon la revendication 16 ou 17,
**caractérisé en ce**
**que** l'arête de diaphragme (BK) est positionnée dans un plan de la pupille d'entrée effective de l'objectif (OBJ1, OBJ2, OBJ3).

19. Procédé selon l'une des revendications 16 à 18,
**caractérisé en ce**
**que** l'arête de diaphragme (BK) est extraite de la trajectoire de rayons lumineux de la lumière d'éclairage et le déflecteur introduit dans la trajectoire de rayons lumineux de la lumière d'éclairage lorsqu'une pupille d'entrée effective de l'objectif se situe en dehors d'une zone accessible à l'arête de diaphragme (BK).

20. Procédé selon l'une des revendications 13 à 19,
**caractérisé en ce**
**que** des réglages du déflecteur, de l'au moins une arête de diaphragme (BK) et/ou d'autres diaphragmes sont entrepris de manière automatisée, en particulier selon une entrée saisie par un utilisateur.

21. Procédé selon l'une des revendications 13 à 20,
**caractérisé en ce**
**que** des réglages du déflecteur, de l'au moins une arête de diaphragme (BK) et/ou d'autres diaphragmes et/ou d'autres composantes optiques sont entrepris de manière automatisée en fonction d'une configuration déterminée de composants existants, en particulier de composants optiques.

22. Système de microscope avec un microscope optique et un dispositif d'éclairage par transmission selon l'une des revendications 1 à 12.

23. Système de microscope selon la revendication 22,
**caractérisé en ce**
**qu'**un dispositif de commande qui est relié à des composants du microscope optique et du dispositif d'éclairage par transmission est présent et est configuré pour commander le microscope et le dispositif d'éclairage par transmission en vue de la réalisation d'un procédé selon l'une des revendications 14 à 22.

24. Système de microscope selon la revendication 22 ou 23,
**caractérisé en ce**
**qu'**est présent un dispositif de stockage dans lequel sont stockés des réglages du dispositif de lumière transmise et du microscope optique, en particulier de l'au moins une arête de diaphragme (BK).
